(19) Europäisches Patentamt

European Patent Office

Office européen des brevets

(11) **EP 2 898 199 B1**

(12) **EUROPEAN PATENT SPECIFICATION**

(45) Date of publication and mention
of the grant of the patent:
**21.09.2016 Bulletin 2016/38**

(21) Application number: **13782662.4**

(22) Date of filing: **24.09.2013**

(51) Int Cl.:
*F02B 41/10* (2006.01)  *F02B 37/00* (2006.01)

(86) International application number:
**PCT/EP2013/069798**

(87) International publication number:
**WO 2014/044865 (27.03.2014 Gazette 2014/13)**

(54) **METHOD FOR CONTROLLING AN HYBRID ENGINE APPARATUS PROVIDED WITH A POWER TURBINE**

VERFAHREN ZUR STEUERUNG EINER LEISTUNGSTURBINE EINER HYBRIDMOTORVORRICHTUNG

PROCÉDÉ DE COMMANDE D'UNE TURBINE DE PUISSANCE D'UN APPAREIL À MOTEUR HYBRIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2012 EP 12185627**

(43) Date of publication of application:
**29.07.2015 Bulletin 2015/31**

(73) Proprietor: **FPT Motorenforschung AG
9320 Arbon (CH)**

(72) Inventor: **MAIER, Christian
CH-9320 Arbon (CH)**

(74) Representative: **Franzolin, Luigi et al
Studio Torta S.p.A.
Via Viotti, 9
10121 Torino (IT)**

(56) References cited:
**EP-A1- 0 222 546      EP-A1- 0 294 146
US-A1- 2008 121 218      US-A1- 2011 094 486**

**Description**

Field of the invention

The present invention relates to a control method for controlling an engine apparatus provided with a power turbine and having a single turbo-compound stage or a double turbo-compound stage. In any case the method is usable to control an engine apparatus provided with a power turbine suitable to generate electric energy useful to supply an accumulator and/or an electrical motor of the hybrid apparatus.

Description of the prior art

As known, for example from EP 0 222 546 A1, an hybrid engine apparatus combines a conventional combustion engine propulsion system with an electric propulsion system. The presence of such electric system is intended to achieve either better fuel economy for the vehicle or a better performance. In the field of industrial vehicles many different kinds of Hybrid Engine Apparatuses (EHA) have been proposed. In a first possible configuration, the HEA are provided with a turbo-compound system defined by at least a compressor (also called charger or supercharger), arranged along the air intake line of the thermal engine. Said compressor is operated by an "High Pressure Turbine" (HPT) arranged along the exhaust line of the thermal engine. Typically, the HEA also comprises a "Low Pressure Turbine" (LPT) by means of which electric energy is generated to be stored into an accumulator.

In an alternative known solution, the HEA are provided with a Low Pressure Compressor (LPC) and a High Pressure Compressor (HPC) arranged along the air intake line of the thermal engine and a high pressure turbine (HPT) and a low pressure turbine (LPT) arranged along the exhaust gas line. According to a well-known "traditional" layout the HPC can be operated by the HPT while the LPC can be operated by the engine shaft or by an electric motor supplied by an accumulator so as to generate a double turbo-charging system. According to a recent proposal disclosed in the patent application PCT/EP2012/060120, the LPC can be operated by the HPT turbine according to a layout substantially "inverse" with respect to the "traditional" one above described. In both the cases (traditional and inverse layout), the compressor not connected to the HPT (LPC for the classical layout and HPC for the inverse layout) can be operated by the engine shaft or by an electric motor supplied by an accumulator. At the same time in both the cases (traditional and inverse layout) the LPT can act as a "generator" of electric energy which is stored in an accumulator.

In any case the efficiency and reliability of the HEA is remarkably influenced by the exhaust mass flow rate and consequently by the behavior of the LPT which acts as a generator. More in detail, the exhaust mass flow of the engine depends mainly on the following parameters: the engine rotational speed, the boost pressure, the volumetric efficiency of the engine and the fuel consumption.

It has been seen that the running conditions of the LPT determines a corresponding variation of its "backpressure" (i.e. the pressure downstream the HPT and upstream the LPT) which determines in its turn a variation of the expansion ratio of the HPT. At low speed of the LPT, it has been noted that the compressor, operated by the could be over-speeded.

Indeed it is known that the turbo charger power balance typically requires that the impeller of the compressor is 16% larger that the impeller of the turbine. This aspect causes an over speed of the compressor because the impeller of the compressor will exceed the maximum rim speed before that the impeller of the turbine. In order to avoid this event, a Waste Gate (WG) or a Variable Geometry Turbine (VGT) are normally used. The WG allows the exhaust gases to bypass the turbine, while the VGT acts by varying the acceleration of the exhaust gas through the turbine so as to vary the corresponding pressure ratio. The compressor is operatively matched to the turbine at operating points characteristic of lower mass flow and power. This matching can provide acceptable transient performance, but it is actually over speeded at rated power. For this reason, as the case, a part of the mass-flow is waste-gated by the WG or the VGT is open to decrease the expansion ratio. These interventions avoid the over-speed.

However the use of a WG or a VGT is critical in terms of costs and also in terms of reliability. In other known solutions, the compressor connected to the HPT is actually matched for rated power without using a WG or a VTG. That is the high pressure turbine has a fixed geometry. However these solutions have a very bad transient response and they do not allow to achieve an high torque at low engine speeds. Further such solutions present very high smoke values during the acceleration and operation cycle. A consequence of this condition is the blocking of the soot filter. Other drawbacks are the high fuel consumption in the transient period and a very high exhaust temperature at low engine speed which can disadvantageously damage the after treatments systems.

It has been noted that the efficiency of the engine apparatus is strictly connected to the efficiency of the LPT. The exhaust mass flow could be actually controlled by using a variable geometry turbine (VTG) as power turbine or as High Pressure Turbine (HPT). The mass flow rate could be increased by increasing the boost pressure that is by closing the VGT. However this intervention causes more pumping work and less efficiency of the engine. On the other hand, if the VTG is open then the backpressure and boost pressure will decrease. This causes a decrease of the exhaust mass flow. Consequently the temperature of the exhaust flow rises and the combustion efficiency decreases because of the changing of Lambda value. Therefore the regulation of the exhaust flow rate by using a VGT can not be regarded as satisfactory.

According to a possible theoretical strategy, the desired efficiency of the LPT with a fixed geometry could be achieved by modulating the exhaust gas properties that means by modulating the exhaust gas pressure, the exhaust gas temperature and the exhaust gas specific capacity. This strategy is quite complicated because it requires the management of three parameters two of which (the exhaust gas pressure and the exhaust gas temperature) have to be modulated with the combustion. This could be theoretically possible but it would require to run the engine out of its BSFC (Brake Specific Fuel consumption) and its mission optimum. Furthermore the exhaust gas pressure and the exhaust gas temperature have to be limited and can not be exceeded for controlling the exhaust gas properties.

According to another aspect, the expansion ratio over the power turbine could be controlled by using an exhaust flap (valve) downstream the same turbine. When this flap is closed the expansion ratio of the upstream turbines (HPT and LPT) decreases. However this control method actually increases the fuel consumption of the engine and therefore it can not be regarded as convenient.

In order to control the exhaust gas temperature through the power turbine, an external burner could be used upstream the same turbine. Such a burner could actually increase the temperature of the exhaust gas before the power turbine. However this solution is not feasible because it would require extra costs by increasing the fuel consumption as well.

Therefore, from what above, the optimum efficiency of the power turbine could theoretically achieved by modulating the gas properties (pressure, temperature) of the gas for each speed of the power turbine with a fixed geometry. However a control based on the exhaust gas properties is not actually feasible because it would influence the combustion process and would increase the fuel consumption by causing, as a matter of fact, worse operating conditions of the engine.

Summary of the invention

Therefore the main object of the present invention is to provide a control method of an engine apparatus which allows to overcome the above indicated drawbacks. Within this aim, a first purpose of the present invention is to provide a method for controlling an hybrid engine apparatus having one or more turbo-compound systems with a classical or inverse layout. Another purpose of the present invention is to provide a method which avoids the over-speeding of the compressor connected to high pressure turbine without using Waste Gate. Another purpose is to provide a method which allows the control of the exhaust gas temperature and the efficiency of the power turbine. Another purpose of the present invention is to provide a control method which is reliable, easy to implement at competitive costs.

This main objects and these purposes are achieved by a method for controlling an engine apparatus wherein said apparatus comprising at least:

- an internal combustion engine having an air intake line and a gases exhaust line;
- at least a first compressor arranged on said air intake line;
- an high pressure turbine arranged on said exhaust line, said high pressure turbine being mechanically connected with said first compressor;
- a power turbine arranged downstream to said high pressure turbine according to the flow direction of the exhaust gases;
- an asynchronous machine operatively connected to said power turbine.

The method according to the invention comprises the steps of:

A1) detecting the real value of the rotational speed of said high pressure turbine by first speed detecting means and detecting the real value of the rotational speed of said low pressure turbine by second speed detecting means;
A2) comparing the real value of said rotational speed of said high pressure turbine with a first speed reference value and comparing said real value of said rotational speed of said power turbine with a second speed reference value;
A3) if said real value of said high pressure turbine is higher than said first speed reference value, then increasing the rotational speed of said power turbine, by means of said asynchronous machine, by keeping its value below said second reference value, until said real value of the rotational speed of said high pressure turbine is less or equal of said first speed reference value.

According to the invention the control of the over speeding of the first compressor is based on a variation of the rotational speed of the power turbine by means of the asynchronous machine. This allows to avoid the installation of a Waste-Gate (WG) with relative advantages in terms, for example, of reliability and costs. Such method is implementable in any of the operating mode of the engine apparatus.

The method according to the invention may implement other control functions among which: the control of the temperature of the exhaust gas during the fired mode, the control of the pressure upstream the power turbine during the brake mode of the engine apparatus, the control of the efficiency of the power turbine during the fired mode. All such control functions are based on a variation of the rotational speed of the power turbine performed by means of said asynchronous machine. Therefore the power turbine is advantageously used for controlling the working conditions of the engine apparatus.

The dependent claims disclose preferred embodiments of the present invention, forming integral part of the present description.

Brief description of the drawings

The invention will become fully clear from the following detailed description, given by way of a mere exemplifying and non limiting example, to be read with reference to the attached drawing figures, wherein:

- Fig. 1 is a schematic view of a first embodiment of an engine hybrid apparatus controllable by the method according to the present invention;
- Fig. 2 shows the curve of the efficiency of a power turbine in function of a possible operative parameter of the control method according to the present invention.
- Fig. 3 is a schematic view of a second embodiment of an engine hybrid apparatus controllable by the method according to the present invention;
- Fig. 4 is a schematic view of a third embodiment of an hybrid engine apparatus, controllable by the method according to the present invention;
- Fig. 5 is a first block diagram relative to the control function of the method according to the invention during a first operating mode of an engine apparatus;
- Fig. 6 is a second block diagram relative to the control function of the method according to the invention during a second operating mode of an engine apparatus;
- Fig. 7 is a third block diagram relative to the control function of the method according to the invention during a third operating mode of an engine apparatus;

The same reference numerals and letters in the figures designate the same or functionally equivalent parts.

Detailed description of the preferred embodiments

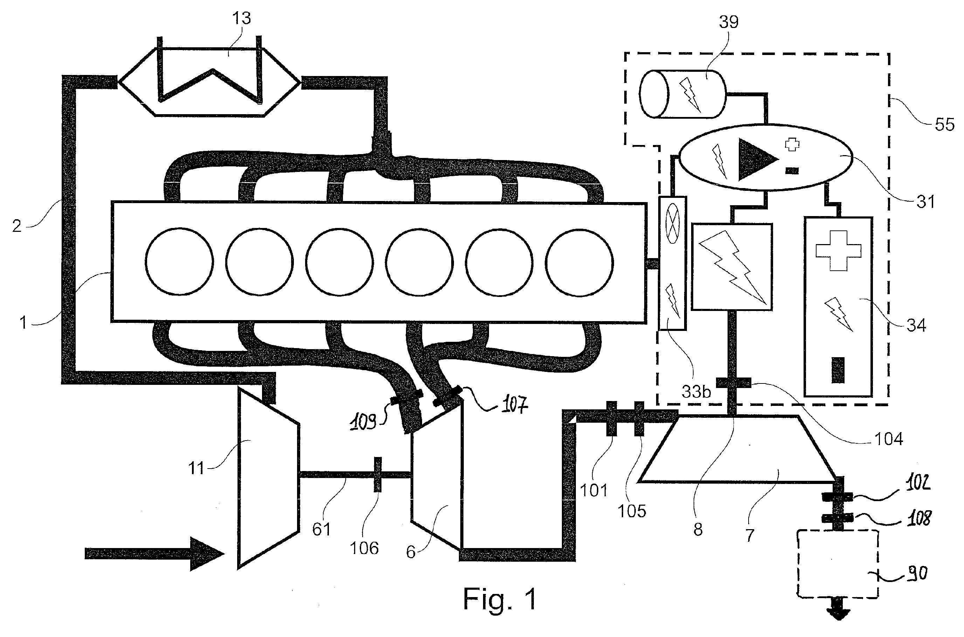

Figure 1 is a schematic illustration of an first embodiment of a hybrid engine apparatus in which the method according to the present invention can be implemented. The engine apparatus, for example of an industrial vehicle, of a ship or of another type, comprises the internal combustion engine 1, which can be a diesel engine. The apparatus comprises an intake line 2 of the engine 1 and an exhaust line 20. Starting from the fresh air admission, on said intake line 2 is arranged, according to the route of the fresh air, at least a main compressor 11 (here below indicated also as "first compressor 11") and at least one cooler 13,13'. With reference to the exhaust line 20, starting from the engine 1, on said exhaust line 20 are sequentially connected, according to the route of the exhaust gasses, a High Pressure Turbine (HPT) 6 and a Low Pressure Turbine (LPT) 7. The skilled person in the art knows what "low pressure" or "high pressure" turbine means and "low pressure" or "high pressure superchargers means" in terms of flow masses, pressures and enthalpies and in view of series connections of such components. Therefore, it is also clear what "high" or "low" define clearly the features of a supercharger or of a turbine in this context. In this regard in the following description the term "compressor" and the term "supercharger" are used with the same meaning.

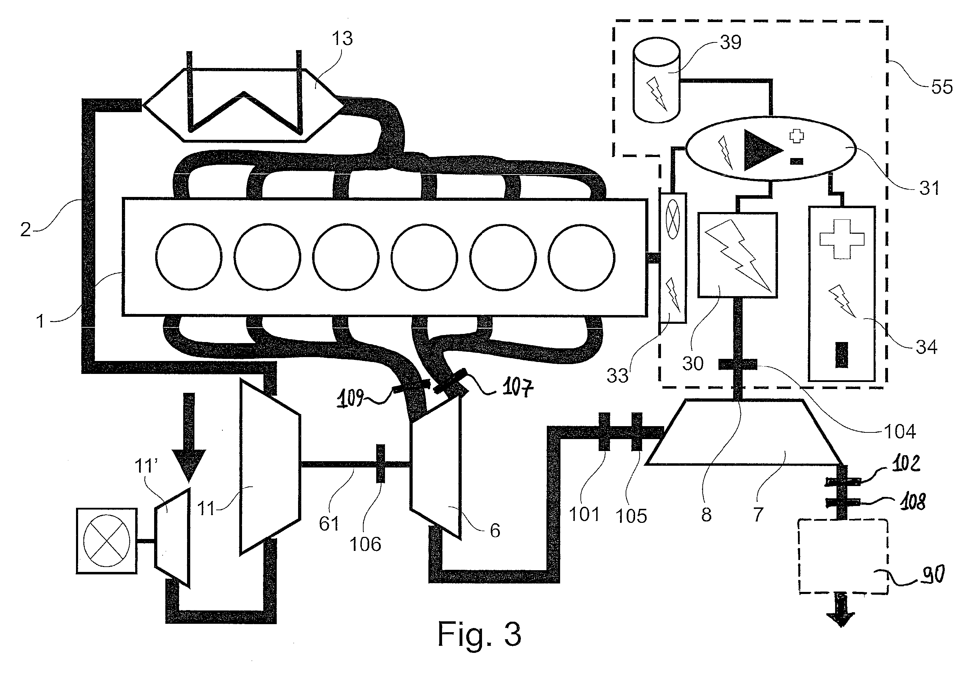

For the purpose of the present invention the expression "power turbine" wants to indicate a turbine connected to an asynchronous machine by means of which mechanical power is converted in electrical power. The "power turbine" is arranged downstream to the HPT. The latter is operatively connected to the main compressor 11 so as to define a turbo-compound stage. In particular the embodiments of the engine apparatus shown in the figures 1,3 e 4 the "power turbine" corresponds to the Low Pressure Turbine (LPT). Therefore in the following the expressions "low pressure turbine", "LPT" and "power turbine" should be regarded as equivalent expressions. Moreover in the following description the Rotational Speed of the HPT will be indicated also with the term RSHPT, while the Rotational Speed of the LPT will be indicated with RSLPT.

With reference always to Figure 1, according to the invention, the main compressor 11 is directly and operatively connected to the HPT 6. More precisely the compressor 11 is driven by the HPT 6 by means of an axial shaft 61. The HPT 6 is preferably connected to the engine 1 by a double connection (twin entry). This solution allows a better transient performance at low speed by gaining the pressure pulsation of the exhaust manifold at a line cylinder engine. In this regard, the direct connection of the engine is rarely subjected to constant exhaust pressure. In pulse turbocharged diesel engines, twin-entry turbines allow exhaust gas pulsations to be optimised, because a higher turbine pressure ratio is reached in a shorter time. Thus, through the increase of the pressure ratio, positive jetting flow, by improving the all-important time interval when a mass flow with high density is passing through the turbines.

As a result of this improved exhaust gas energy utilisation, the boost pressure characteristics of the engine and, hence, the torque behaviour is improved, particularly at low engine speeds. As shown in Figure 1, in order to prevent the various cylinders from interfering with each other during the charge exchange cycles, half number of cylinders are connected into one exhaust gas manifold 20 which forms the "outlet" of said combustion engine 1. Therefore the twin-entry of the HPT 6 allows the exhaust gas flow to be fed separately through the turbine.

With reference again to figure 1, the engine apparatus comprises an electric torque converter 55 provided for converting the rotational movement of the LPT 7 in electrical energy. The converter 55 is a part of the "electric assembly" of the hybrid engine apparatus by means of which an additional power is provided, when it is required, to the crankshaft of the combustion engine. More in detail the electric torque converter 55 comprises an Asynchronous Machine (herein below indicated also with AM) 30 mechanically connected to said LPT 7 (power turbine). The rotor of the AM 30 is directly connected to the shaft of the LPT 7. The AM 30 is operated by means of control means 31 which can comprise, for example, an inverter or other equivalent means.

The electric torque converter 55 also comprises an accumulator 34 which can be, for example a battery or a DC bus. Such accumulator is electrically connected to AM 30 trough the control means 31 in order to be charged. The electric torque converter also comprises an electrical machine (herein below indicated also with EM) 33 electrically connected/controlled to/by the inverter 31. The EM 33 is mechanically connected to the crankshaft of the combustion engine 1 in order to provide a supplementary torque when such EM 33 works as an electric motor. In this regard, according to a first possible configuration the EM 33 can be an electric motor provided only for adding a supplementary torque to the engine. Alternatively the EM 33 could be an asynchronous machine which can work as an "electrical motor" or a "electrical generator" (for example during the braking mode of the engine) depending on the case. On this point, when an asynchronous machine is used as EM 33, then the torque converter 55 preferably comprises a condenser 39.

The EM 33 can get power out of the condenser 39, by the control means 31, in case of a short term demand and out of the accumulator (battery /DC bus 34) in case of long term demand. This allows to improve the transient performance of the EM 33. Moreover the condenser 39 allows to preserve the battery by slowing its aging.

The hybrid engine apparatus according to the invention comprises an Electronic Control Unit (ECU) operatively connected to the control means 31 and indirectly connected to the AM 30. Preferably the ECU manages both the "mechanical assembly" (i.e. the combustion engine 1, HPT 6 and compressor 11) and the "electrical assembly" (i.e. the electrical torque converter 55) of the engine apparatus so as to change its operative configurations. In particular according to the invention the ECU manages the control means 31 in order to vary the rotational speed of the LPT as below indicated. Figure 3 shows a second possible embodiment of an engine apparatus having a inlet line 2 on which a first compressor (main compressor) 11 and a second compressor 11' are arranged. In such embodiment the main compressor 11 is an high pressure compressor HPC) connected to the HPT 6. Instead the second compressor 11' corresponds to a Low Pressure Compressor (LPC), while the second compressor 11 corresponds to the an High Pressure Compressor (HPC). It has to be noted that in the embodiment of Figure 3, the HPT 6 is arranged so as to operate the HPC 11 according to a classical/traditional layout of a turbo-compound engine apparatus.

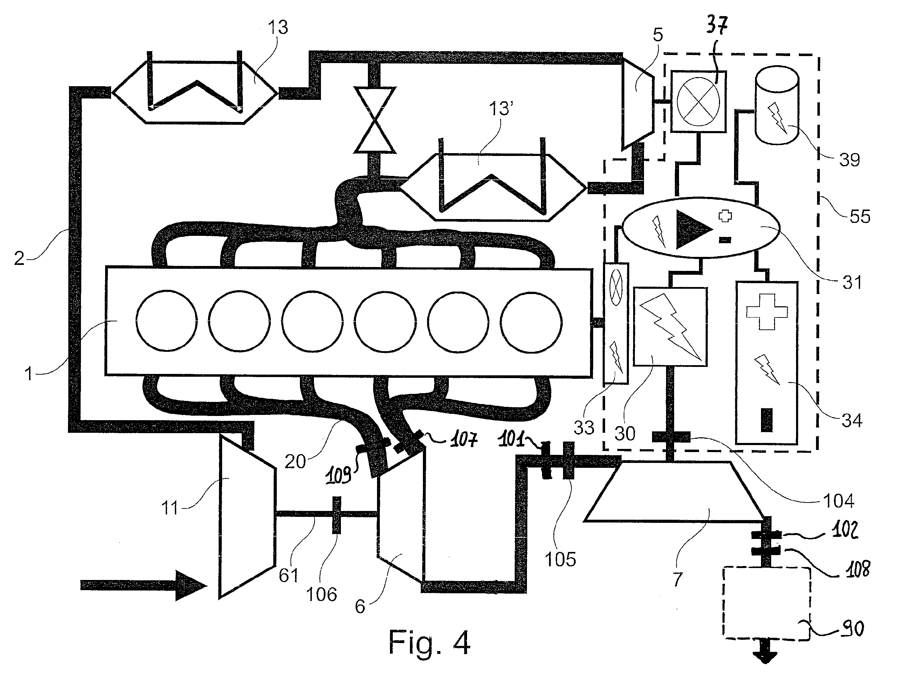

However according to another possible embodiment shown in Figure 4, the engine apparatus could have an "inverse" layout for which the main compressor 11 is a "Low Pressure Compressor" (LPC) connected to the HPT 6 and for which a second compressor 5 is an "High Pressure Compressor" (herein below indicated also with "HPC 5" or "Blower 5") operated by an electrical motor 37. The latter is in its turn operated by the control means 31 above indicated. According to the layout of Figure 4, the engine apparatus comprises first by-passing means which allows to by-pass the HPC 5 (Blower 5) when its intervention is not required.

The control method according to the invention can be implemented independently from the layout of the engine apparatus. On this regard, the engine apparatus shown in the Figures 1, 3 and 4 are preferably provided with an After Treatment System (ATS) 90 provided downstream the LPT 7. The ATS is indicated in the Figures with dashed lines. As below indicated, the control method implements some functions connected to the ATS. However if the ATS is not installed the functions connected to the ATS are blocked.

The engine apparatus shown in the Figures 1-4, could operate according to at least three possible operating modes: a fired mode for providing torque/power to the crankshaft of the engine 1, an engine brake mode when the engine apparatus is used actively for braking the vehicle, and a "coasting mode" when the injection is off and the engine brake mode is not activated. The coasting mode occurs, for example, when the driver take off the foot from the gas pedal (no injection) without activating any braking action. In such condition, the vehicle slows down because of rolling and aerodynamic resistance.

During the operation, the ECU detects continuously the operating mode of the apparatus. For this purpose, the ECU firstly detects the condition of the injection (OFF/ON). In case of injection ON, the engine apparatus operates according to a fired mode. In case of the injection OFF, if the engine brake mode is not actuated by the driver, then the engine apparatus operates according to the coasting mode and the ECU detects such condition. When the ECU detects the injection OFF and Engine Brake ON, the engine apparatus runs in the engine brake mode.

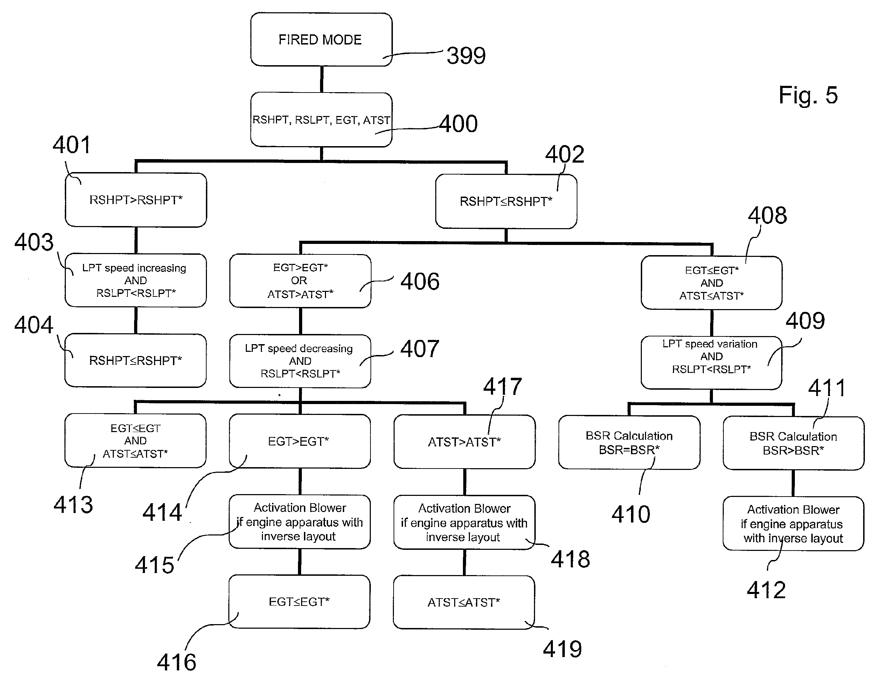

Figures 5, 6, 7 are block diagrams relative to the functions implemented by the control according to the invention during the operative modes above indicated. According to the present invention, the main function implemented by the control method is the control of the over-speeding of the main compressor 11 connected to the HPT 6. For this purposed the control method comprises the steps of:

A1) detecting the real value of RSHPT (rotational speed of said HPT 6);

A2) comparing the real value of RSHPT with a first speed reference value (following indicated with RSHPT*);

A3) if the real value of RSHPT is higher than said first speed reference value RSHPT, then increasing the value of the RSLPT by means of the asynchronous machine 30.

In particular according to the invention, the RSLPT (rotational speed of LPT) is increased by keeping its value below a second speed reference value RSLPT* characteristic of said LPT.

The above steps A1)-A3) advantageously allow to avoid the over-speeding of the main compressor 11 connected to the HPT 6 in all the operating modes above indicated. Indeed, the rotational speed (RSLPT) of the LPT 7 has an influence on the resistance of the gas flow trough the same LPT. At high speeds of the LPT 7, the vanes of the LPT 7 blocks the flow more than a low speeds. That means the expansion ratio distribution of the two stage (high pressure stage and low pressure stage) is varied accordingly. An high speed of the LPT 7 results in a higher expansion ratio of the same LPT and a lower expansion ratio of the HPT 6. In such condition the speed and the boost pressure of the high pressure stage decrease.

As above indicated, when the value of RSHPT, and consequently of the main compressor 11, is higher than the first speed reference value RSHPT*, the rotational speed of the LPT 7 is increased without overcoming a second speed reference value RSLPT* characteristic of the working of the same LPT. This last condition is searched in order to avoid the over-speeding of the LPT 7. This event could lead to a fatal mechanical damage and could have repercussions on other parts downstream the turbine such as for example the After Treatment System, the muffler, etc. From what concerns the first speed reference value RSHPT*, it is a characteristic of the main compressor 11 to which the HPT is connected. The RSHPT* is substantially an upper limit above which the condition of over-speed of the main compressor 11 occurs.

As above indicated, the control of the over-speed is advantageously performed during any one of the operating mode of the engine apparatus (fired mode, coasting mode, engine brake mode). This allows to avoid the installation of a Waste-Gate (WG) with relative advantages in terms, for example, of reliability and costs. Indeed the method of the present invention causes a loss of the speed of the main compressor 11 by increasing the rotational speed of the LPT 7 when the condition of over-speed occurs (that is when RSHPT>RSHPT*). In such condition, the pressure downstream the HPT 6 is increased, the rotational speed of the HPT 6 and of the main compressor 11 is decreased and less power is delivered to the high pressure stage (HPT 6, main compressor 11). In other words, when the speed of the LPT 7 is increased the power is shifted from the HPT 6 to the LPT 7.

For the purpose of implementing the above steps of the control method, the engine apparatus comprise first speed detecting means (for example a first speed sensor 106) for detecting the rotational speed of the HPT 6 (and consequently of the main compressor 11) and second speed detecting means (for example a second speed sensor 104) for detecting the rotational speed of the LPT 7. These speed detecting means 104,106 are electrically connected to the ECU in order to detect the real values of RSLPT and RSHPT. A PID controller (or equivalent electronic means) of the ECU performs a comparison between the real value of RSHPT and the first speed reference RSHPT*. If the condition RSHPT>RSHPT* occurs, then the ECU provides a first control signal to the control means 31 of the EA. The latter will act on the AM 30 so as to increase the real value of RSLPT (rotational speed of LPT 7). At the same time, the ECU compares continuously the real value of the speed of LPT 7 with the second speed reference value RSLPT* in order to avoid the over-speeding condition of the same LPT 7.

The block scheme reported in Figure 5, shows schematically the main functions of the control method according to the invention during the Fired Mode (indicated by the block 399) of the apparatus. During the Fired Mode, the ECU constantly detects the real value of the RSHPT (rotational speed of HPT), RSLPT (rotational speed of LPT) and preferably also the Exhaust gas temperature and the temperature of the ATS, if it is installed (block 400).

On this regard, the blocks from 401,403,404 concern the control function of the over-speeding of the main compressor 11. When the condition RSHPT>RSHPT* occurs (block 401), then the speed of LPT 7 is increased subject to the condition RSLPT≤RSLPT* (block 403). Under this condition, the speed of LPT 7 is increased until the value of RSHPT is bring back below the RSHPT* (block 404).

During the Fired Mode of the engine apparatus, when the value of RSHPT* is less or equal the first speed reference value RSHPT* (block 402), a control function of the Exhaust Gas Temperature (following indicated also with "EGT") is preferably implemented (steps 406,407,413,414,415,416). More in detail when the condition RSHPT≤RSHPT* is satisfied, the control method implements the steps of:

B1) detecting the real value of the EGT by first temperature means arranged upstream the HPT 6;

B2) comparing said real value of EGT with a first temperature reference value (below indicated with EGT*);

B3) if EGT is higher or equal of EGT*, then decreasing the value of RSLPT (rotational speed of said power turbine 7), by means of said AM 30, while keeping the condition RSLPT≤RSLPT*.

The steps B1), B2) and B3) advantageously allow to control the increasing of the EGT at low speeds of the main compressor 11 and of the HPT 6. The steps B1), B2) and B3) are performed when the condition RSHPT≤RSHPT* is satisfied, that means when there is not a risk of a over-speeding of the main compressor 11. The control function of the over-speed condition of the main compressor 11 (steps A1)-A3) above reported) has in any case the priority on the EGT control. On the other hand, at high speeds of the compressor 11, the real value of the EGT tends to decrease.

As above indicated, for the purpose of the steps B1)-B3), the engine apparatus comprises first temperature detecting means, including at least a temperature sensor 107, for measuring the EGT upstream the HPT 6. The first temperature detecting means are electrically connected to the ECU so that the ECU compares the real value of the EGT with the reference value EGT* when the condition RSHPT≤RSHPT* occurs (block 402). The first temperature reference value EGT* is around 750 C° for material safety reasons. If the condition EGT≤EGT* is satisfied (block 406), then the ECU provides a corresponding control signal to the control means 31 of the electrical apparatus 55 following which the AM 30 decreases the real value of RSLPT (rotational speed of LPT) under the condition RSLPT≤RSLPT* (block 407).

Always with reference to the Figure 5, if the engine apparatus comprises an After Treatment System (ATS) 90, for example a Diesel Oxidation Catalyst (DOC), then the control further comprises the steps of:

C1) detecting the real value of the ATS Temperature (in the following indicated with ATST);

C2) comparing the ATST with a second temperature reference value (in the following indicated with ATST*) characteristic of the structure of the ATS (i.e. of the DOC);

C3) if said real value of the ATST is higher or equal to ATST*, then decreasing the value of RSLPT 7 by means of said asynchronous machine 30 while keeping its value below said second speed reference value RSLPT* (under the condition RSLPT≤RSLT*).

The steps C1)-C3) advantageously allow to perform a control of the temperature of the ATS 90 always by using the modulation of the speed of LPT 7. In particular such steps allows to keep the ATST below the ATST* that is an upper limit (around 550 °C) which can not be overcome in order to keep the ATS in the right working conditions. It has to be noted, that both for the control of ATST (steps C1)-C3)) and for the EGT control (steps B1)-B3)), the method provides a reduction of the speed of LPT 7 (decreasing of RSLPT). In particular the speed of LPT 7 is decreased when the EGT>EGT* or when ATST>ATST* (block 407). Indeed when the LPT speed (RSLPT) is decreased, then the power is shifted from the LPT to the HPT. That means the expansion ratio at the HPT 6 increases and consequently both the temperature EGT and of ATST decrease. The speed of LPT 7 is decreased until the conditions EGT≤EGT* and ATST≤ATST* are achieved (block 413). If the ATS is not installed that the speed of LPT is decreased until the condition EGT≤EGT* is reached only.

From what above, the function control of the over-speed condition of the main compressor 11 (steps A1)-A3) above reported) has the priority on the control of the ATST. Instead the control of the ATST and of the EGT are performed simultaneously.

For the purpose of the of the steps C1)-C3), the engine apparatus also comprises second temperature detecting means, comprising al least a second temperature sensor 108, for measuring the ATST. In particular such temperature is preferably detected along the exhaust line 20 before the inlet of the ATS, i.e. substantially at the inlet of the DOC 90. Also the second temperature detecting means are electrically connected to the ECU so that the ECU compares the real value of the ATST with the second temperature reference value ATST*. When the condition ATST≤ATST* occurs, the ECU sends a corresponding control signal to the control means 31 which acts on the AM 30 so as to decrease the value of RSLPT subject to the condition RSLPT≤RSLPT*.

Always with reference to the scheme of Figure 5, when the engine apparatus has the "inverse layout" shown in Figure 4, then the method comprises further steps for the temperature control functions. These steps are implemented when, following the decreasing of the LPT speed (block 407), the conditions EGT≤EGT* or ATST≤ATST* (block 413) are not achieved. More in detail, the control method further comprises the steps of activating the Blower (HPC 5 in Figure 4) if, following the decreasing of the LPT speed (block 407), the condition EGT>EGT* (block 414) still persist. The Blower 5 (block 415) is activated until the EGT is bring back (below) the reference value EGT* that is until the condition EGT≤EGT* is achieved (block 416).

With reference to the blocks 417-419, the Blower 5 is activated also if, following the decreasing of the LPT speed (block 407), the condition ATST>ATST* occurs (block 417). Similarly to what provided for the EGT control, the Blower 5 is activated (block 418) until the condition ATST≤ATST* is achieved (block 419). In both the cases, in the engine apparatus of figure 4 (i.e. when the blower 5 is available) for EGT control and for ATST control, if the decreasing of the speed of LPT (block 407) is not sufficient to decrease the temperature (EGT and/or ATST), then the Blower 5 is activated. For the purpose of the invention, the expression "activation of the Blower" wants actually to indicate an increasing of the rotational speed of the Blower 5. An increasing of the Blower 5 speed generates a higher boost pressure which reduces the EGT and the ATST. On the contrary if following the decreasing of the LPT (block 407), the conditions EGT≤EGT* and ATST≤ATST* occur (block 413) than the Blower 5 is not activated.

The control method according to the invention comprises at least a further control function implementable during the "fired mode" for the purpose of improving the efficiency of the LPT 7. More in detail, with reference again to the block diagram of Figure 5, when the condition RSHPT≤RSHPT* (block 402) is satisfied and if:

1) the value of the EGT is less or equal to said first temperature reference value EGT* (that is when EGT≤EGT*);
2) the value of ATST is less or equal of said second temperature reference value (ATST*)(that is ATST≤ATST*) (block 408), then the control method provides for varying the RSLPT (rotational speed of LPT 7) as a function of the real value of an operative parameter characteristic of the efficiency of said power turbine 7 so as to maintain the efficiency above a pre-established required efficiency reference value. Such variation is performed always under the condition RSLPT≤RSLPT* (block 409).

According to the invention, said operative parameter is preferably the Blade Speed Ratio (BSR) calculated as a function of the rotational speed of the LPT 7 so that the real value of the operative parameter is characteristic of the real efficiency of the LPT 7. The BSR is defined as a function of the condition of the exhaust gases upstream and downstream the LPT, and also as a function of the geometry of the LPT and therefore of the its rotational speed.

More in detail when the above conditions 1) and 2) occur and when there is not a condition of the over-speeding of the compressor (that is when RSHPT≤RSHPT*) then the variation of the RSLPT is performed by at least the following steps:

- calculating the real value of the BSR;
- comparing the real value of BSR with at least a reference value of said BSR (following indicated with BSR*) corresponding to a required value of efficiency of the LPT 7;
- if the real value of BSR is lower than BSR* then varying the value of RSLPT by means of the AM 30 until said real value of the BSR is equal or higher of said BSR*.

According to a possible procedure, the real value of the BSR is compared with at least a first reference value R1-BSR and with a second reference value R2-BSR greater than the first reference value. Said reference values for the BSR define a range of values of the BSR for which the efficiency of the LPT 7 is above the required threshold (value). Said reference values of the BSR are advantageously stored in a efficiency MAP. In other words the "reference values" stored in the MAP correspond to the values that should be achieved by the BSR for maintaining the desired efficiency of the LPT.

On the basis of the comparison between the real value of the BSR and the reference values R1-BSR and R2-BSR, the rotational speed of the LPT 7 is increased or decreased, by the asynchronous machine 30, in order to vary the real value of the BSR towards the theoretical value stored in the map. More precisely the rotational speed is varied until the real value of the BSR is included in the range defined by said first reference value R1-BSR and said second reference value R2-BSR.

The variation of the speed of the LPT 7 is performed by the AM 30 which is in its turn operated by the control means 31. The latter intervene of the AM 30 by varying the current who crossed the windings of the stator. Such variation of current determines a variation of the load on the rotor of and therefore a variation of the speed of the same rotor. That is translated into a corresponding variation of the speed of the LPT 7 connected to the rotor. The variation of the current is a consequence of a variation of the resistance of the electric circuit. Such variation of the resistance is obtained, in its turn, by means of a variation of the frequency or of the voltage of the stator caused by the intervention of the control means 31.

With reference to the Blade Speed Ratio (BSR), it is defined by the formula:

$$BSR = u/c$$

wherein u is the radial speed of the impeller of the LPT 7 which depends on the geometry of the same impeller. In particular "u" can be calculated according to the formula:

$$u= (2*\pi*n_{LPT})*(D_{LPT}/2)$$

wherein $n_{LPT}$ and $D_{LPT}$ are respectively the speed (rpm) and the external diameter of the impeller. The parameter c is characteristic of the conditions of the exhaust gases and can be calculated according to the formula:

$$c=(2*Cp*T*(1-(P_3/P_4)^{((1-\gamma)/\gamma)}))^{1/2}$$

wherein $P_3$ and $P_4$ are respectively the pressure of the exhaust gases upstream and downstream the LPT 7 and wherein T is the temperature of the exhaust gases before the LPT 7.

For the purpose of calculating the BSR, the engine apparatus comprise first pressure detecting means and in particular at least a first pressure sensor 101 and at least a second pressure sensor 102 arranged respectively upstream and downstream the LPT. The temperature upstream the LPT 7 is detected by the third detecting means 105 arranged along the exhaust line 20 (see Figures 1,3 and 4) before the inlet of the LPT 7.

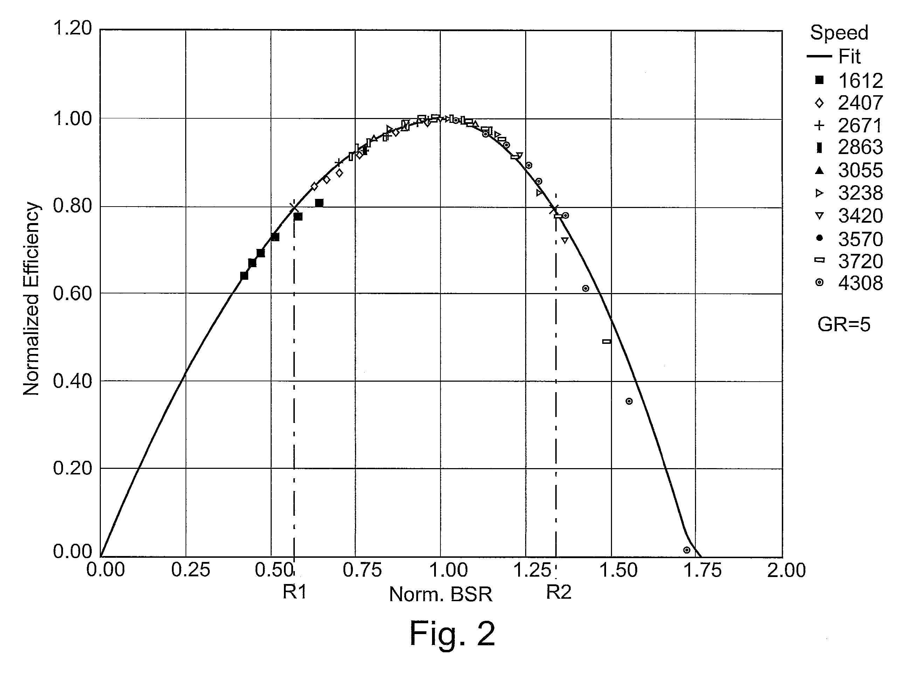

The real value (R-BSR )of the BSR is calculated by the ECU on the basis of the information provided by the pressure and temperature detecting means (sensors 101,102,105) above indicated. A PID controller of the ECU (or equivalent electronic means) performs a comparison between real value R-BSR of the BSR with a first reference value R1-BSR and a second reference value R-BSR of the BSR of the parameter stored in the MAP of the ECU. The second reference value R2-BSR is greater than the first reference value R1-BSR so that the two reference values defines a range value for which the efficiency of LPT is greater than the required value as shown in Figure 2 below better explained.

If the real value R-BSR is lower than the first reference value R1-BSR, then the ECU provides a first control signal to the control means 31 of the EA. In response of such first signal the control means 31 acts on the AM 30 so as to increase the rotational speed of the LPT 7. If the R-BSR is greater than the second value R2-BSR, then the ECU provides a second control signal to the control means 31 in response of which the control means 31 acts on the AM 30 so as to decrease the rotational speed of the LPT 7.

In both the cases, the ECU also calculates the intensity of the variation of the speed required to vary the real value of the BSR. On the basis of such real value the ECU send to the control means the control signals above indicated to the control means 31. The latter acts on the AM 30 so as to vary accordingly the frequency and the voltage of the stator so as to obtain the desired variation of the speed of the rotor that is the rotational speed of the LPT 7.

Afterwards the variation of the rotational speed of the LPT 7 a new value of the R-BSR is calculated by the ECU. The variation of the speed of the LPT is performed until the real value R-BSR is bring back in the pre-established range of values (from R1-BSr to R2-BSR). That means the increasing/decreasing of the rotational speed is performed until the R-BSR corresponds to a real efficiency greater than or equal to that required.

In this regard, the Figure 2 is a diagram of the efficiency of the LPT 7 as a function of the BSR. In particular the curve shown in Figure 2 is defined for a particular condition of the "gear ratio" (GR) that is the ratio between the rotational speed of the LPT 7 and the rotational speed of the engine according to the formula:

$$GR= rpm_{LPT}/rpm_{engine}$$

From the formula just above, it is clear that the parameter GR depends on the geometry of the LPT 7 and consequently it can be regarded as a fixed parameter once the LPT 7 has been chosen. In the diagram of Figure 2, different symbols (circles, triangles, rectangles, etc) are used to indicate the efficiency as a function of the R-BSR and of a fixed value of GR. The continuous reference curve is the theoretical curve of the efficiency as a function of the BSR with a GR corresponding to 5. As shown in Figure 2, the efficiency of the LPT is above the value of 0.8 (above 80%) when the BSR is contained in a range defined between the first reference value R1-BSR and the reference second value R2-BSR which is greater than R1-BSR. Therefore according to a possible embodiment of the present invention, when the real value R-BSR is lower than R1-BNSR or higher than R2-BSR, the rotational speed of the LPT 7 is varied (it is respectively increased or decreased) so as to bring back the real value R-BSR within the range R1-BSR and R2-BSR.

This allow to maintain the efficiency of the LPT 7 above the 0.8. The comparison of the R-BSR with the R1-BSR and R2-BSR is performed by the ECU (in particular by a PID controller) which verifies constantly the operating point of the LPT with respect to a curve of efficiency as that shown in Figure 2. The choice of R1-BSR and R2-BSR corresponds substantially to the choice of the threshold of efficiency above which the LPT has to work.

As above indicated, according to the invention, the variation of the R-BSR is performed by acting on the AM 30 whose rotor is connected to the shaft of the LPT 7. On this point, it has to be noted that the variation of the BSR is obtained without acting on the mass-flow rate that means without varying the temperature and the pressure of the exhaust gases. The control of the LPT 7 is based only on the modulation of its rotational speed. At the same time the variation of the BSR is performed without varying the geometry of the LPT 7. That means the variation of the BSR 7 is performed without varying the running condition and the performance of the engine and at the same time without using a VGT as LPT 7.

Always with reference to Figure 5, when the control method is implemented in the engine apparatus shown in Figure 4 (inverse layout), then the control function of the efficiency of the LPT 7 can comprises other steps (blocks 410, 411, 412) in order to refine the control. Indeed the control of BSR could be based on a precise reference value (indicated with BSR*) instead of a range of values as above indicated. In this case, the variation of the speed of the LPT 7 speed is performed so as to reach the condition BSR=BSR* (block 410). If such condition is not achieved (that is when BSR differs from BSR*, then the method provided for the activation of the Blower 5 (block 412) in order to increase the mass-flow over the engine and the speed of the exhaust gas. The activation of the Blower 5 is actually useful when the condition BSR>BSR* and the speed of LPT 7 can not be decreased in order to respect the conditions EGT≤EGT* and ATST≤ATST*. In such conditions, the activation of the Blower 5 is activated for deliver more mass-flow and increasing the speed exhaust gas. This translates in an increasing of the value of parameter "u" in the BSR formula and consequently in a reduction of the BSR towards BSR*.

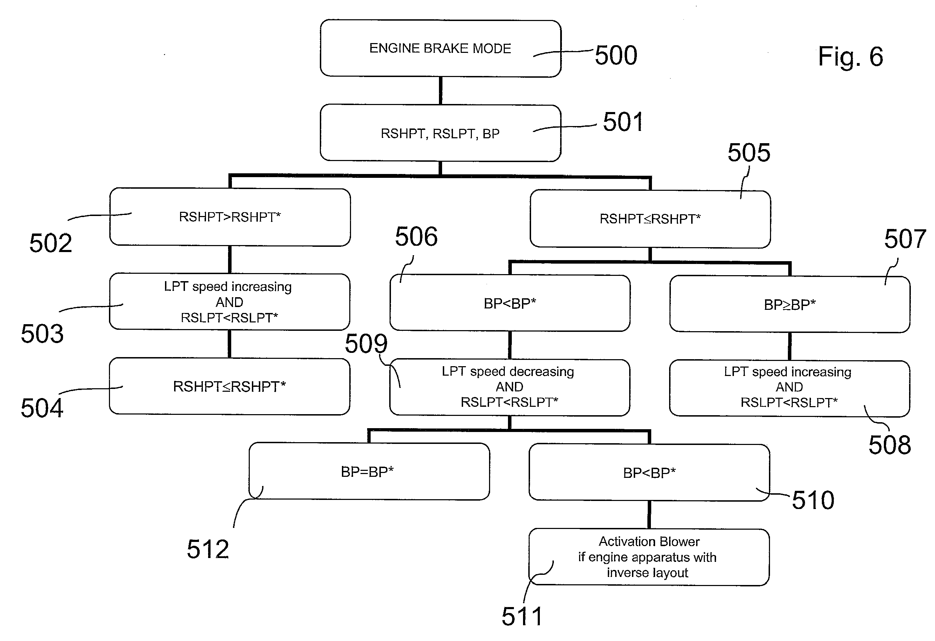

The block scheme reported in Figure 6, shows schematically the functions implemented by the control method during the engine brake mode (indicated by the block 500). In this case, the ECU constantly detects the real value of the RSHPT (rotational speed of HPT), RSLPT (rotational speed of LPT) and the pressure upstream the LPT, and more in detail upstream the HPT (block 501). In the following, such pressure is called "Back Pressure" and indicated with BP. The BP is detecting with second pressure detecting means (comprising a further pressure sensor 109) arranged upstream the HPT 6. During the engine brake mode, when the value of RSHPT is higher than RSHPT* (condition in the block 502), then the ECU increases, by means of the AM 30, the value of RSLPT (rotational speed of LPT) in order to avoid the over-speeding of the main compressor 11 connected to the HPT 6. The RSLPT is always increased subject to the condition RSLPT≤RSLPT* (block 503). The control of the over-speeding of the main compressor 11 ends when the condition RSHPT≤RSHPT* (block 504) is satisfied.

Always with reference to the scheme in Figure 6, during the engine brake mode, the method according to the invention comprises preferably comprises other steps (blocks from 505 to 512) having the purpose of controlling the real value of the BP. Indeed, when the condition RSHPT≤RSHPT* is satisfied (block 505), then the method further provides for the steps of:

E1) detecting the real value of the BP (by said second detecting means 109);
E2) comparing the real value of BP (back pressure) with a pressure reference value (following indicated also with BP*); E3) if BP is higher or equal than BP* (block 507) then increasing, by means of said AM 30, the value of RSLPT (rotational speed of LPT) while keeping such value below the second speed reference value (RSLPT*), i.e. subject the condition (RSLPT≤RSLPT*) (block 508);
E4) if BP is less than BP* (block 506) then decreasing, by means of said AM 30, the value of RSLPT subject to the condition RSLPT≤RSLPT* (block 509).

The steps E1)-E4) are performed in order to keep the value of BP as far as possible corresponding to the pressure reference value BP*. In the block diagram of Figure 6, the blocks 507 and 508 are relative to the step E3), while the blocks 506 and 509 refer to the step E4). As above indicated when the condition BP<BP* is satisfied (block 506), the RSLPT is decreased subject to the condition RSLPT≤RSLPT* (block 509). When the condition BP>BP* is satisfied (block 507), the RSLPT is increased always subject to the condition RSLPT≤RSLPT* (block 508).

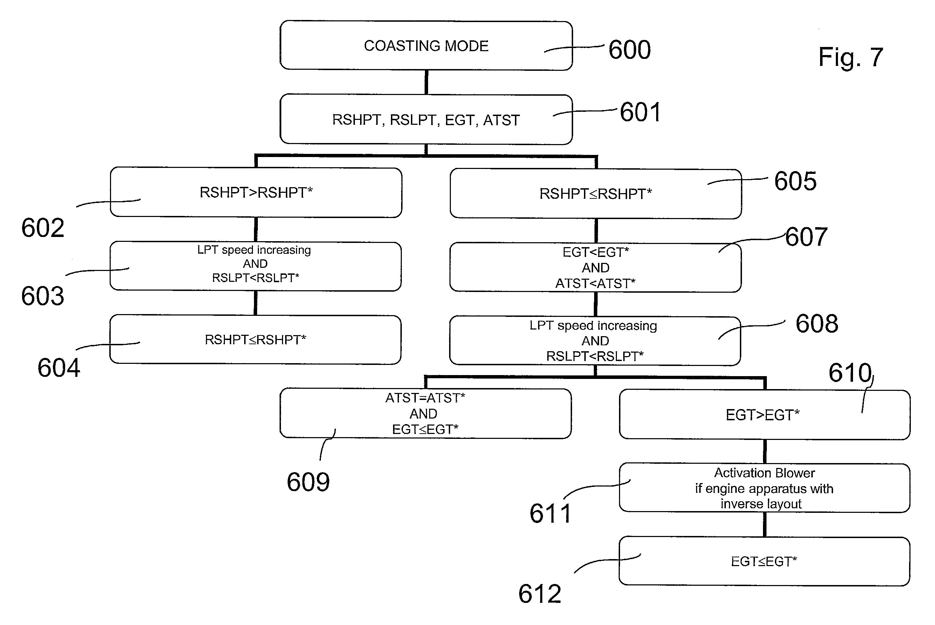

With reference to the scheme of Figure 6, when the engine apparatus has an inverse layout as in Figure 4, then the method comprises further steps for controlling the real value of the BP. Indeed, in such case (engine apparatus of Figure 4) if following the step above step E4) (blocks 506 and 509), the value of the BP is still less of the pressure reference value BP* (blocks 510), then the control method comprises the step of activating the blower (5) (block 511) in order to increase the value of the BP. The activation of the Blower 5 increases the boost at low speed of the HPT 6 and that translates in a higher pressure downstream the same HPT 6. The Blower 5 is activated until the value of the BP reaches the pressure reference value BP*, that is until the condition BP=BP* is reached. On the contrary if following the step above step E4) (blocks 506 and 509), the value of the BP is equal to BP* (block 512) then the Blower is not activated. The block scheme reported in Figure 7, shows schematically the function of the control of the engine apparatus during the coasting operating mode (block 600). In such mode, the ECU detects continuously the real value of RSHPT (rotational speed of HPT 6), RSLPT (rotational speed of the LPT 7), the EGT (exhaust gas temperature) and ATST (temperature of ATS 90 when it is installed) (block 601). The real values of such parameters (RSHPT, RSLPT, EGT, ATST) are detected by the corresponding sensors (109 for BP,101, 104, 105, 108) above described.

In the block diagram of Figure 7, the blocks 602, 603 and 604 refer to the control of the over-speed of the main compressor 11 connected to the HPT 6. This function is substantially equivalent to that provided for the fired mode and the brake mode above disclosed. Indeed, also in this case the ECU performs the steps A1)-A3) above disclosed. When the real value of RSHPT is higher than the first speed reference value RSHPT* (block 602), then the ECU increases the RSLPT (rotational speed of the LPT) (block 603) always by keeping its value below the second speed reference value (RSLPT*). The value of RSLPT is increased until the condition RSHPT≤RSHPT* is achieved (block 604).

The blocks from 605 to 612 in figure 7, refer to the control of the temperature always during the coasting mode of the engine apparatus. In particular such part of the control is implementable on the engine apparatus shown in Figure 4 having an "inverse" layout and provided with a Blower 5 as above described in detail and when the ATS is installed. Also in this case the control function of the over-speeding of the HPT (blocks 602, 603, 604) has the priority on the control of the temperature (blocks from 605 to 612). That means the temperature control steps are actuated only when the condition RSHPT≤RSHPT* is satisfied (block 605).

In such conditions, the control method further comprises the steps of comparing the detected value of EGT with the first temperature reference value EGT* and comparing the real value of ATST with the second temperature reference value ATST*. If the conditions EGT≤EGT* and ATST<ATST* are satisfied (block 607), then the RSLPT (rotational speed of LPT) is increased always under the condition RSLPT≤RSLPT* (block 608). This step allows to increase the thermal level of the exhaust gas for achieving the conditions ATST=ATST* and EGT≤EGT* (block 609).

In the case of the coasting mode, the control method provided for an increasing (block 608) of the value of RSLPT (rotational speed of LPT 7) so as to heat up the engine and avoid the cooling of the ATS which occurs at coasting. The cooling of the ATS under a normal working temperature is an inconvenient because when the engine apparatus come back into the fired mode, the engine has to heat up the ATS with bad efficiency generated by the need of arranging systems for this purpose: post injection means, exhaust flap, burners etc. On the contrary an increasing of the speed of LPT 7 translates into an increasing to the EGT and the ATST. This allow to keep the ATS at the normal working temperature so that when the engine apparatus come back into the fired mode the engine can work at the best efficiency.

Always with reference to the diagram of Figure 7, the blocks 610, 611 and 612 refer to further steps of the control method relative to the control of EGT. Indeed there is the need to control the increasing of EGT following the increasing of the speed of LPT (block 608). As shown in the block diagram of Figure 7, when the condition EGT>EGT* occurs (block 610), then the method providing for activating the Blower 5 (block 611) so as to increase the mass-flow obtaining the reduction of the value of EGT. Therefore the activation of the Blower 5 is maintained until the condition EGT≤EGT* is newly reached (block 612). On the contrary, when following the increasing of the speed of LPT (block 608) the condition ATS=ATST* and EGT≤EGT* occur (block 609) then there is not an intervention/activation of the Blower 5.

On the basis of what above, the control method according to the invention is substantially based on the regulation of the speed of LPT 7. In particular the method allows to implement many control functions the first of which is avoiding the over-speeding of the main compressor 11 in all the operative modes (fired-brake-coasting) of the engine apparatus. This result is reached by increasing the value of RSLPT, by means of the AM 30 controlled by the ECU, by respecting the condition RSLPT≤RSLPT*.

The control method also performs a control of the EGT (exhaust gas temperature) and of the ATST (when the ATS is present) at low speeds of the main compressor 11 and of the HPC 6 that is when the condition RSHPT≤RSHPT* is satisfied. In the fired mode, when the real value of EGT exceeds its reference value EGT* or when the real value of ATST exceed its reference value ATST*, the control intervenes by decreasing the speed of the LPT 7 corresponding reference value so as to reduce the thermal level of the exhaust gas upstream the LPT 7 and before the ATS 90. It has to be noted that the reference values EGT* and ATST* are upper limits used by the control for assuring the right working of the engine apparatus. Indeed if the values of EGT and ATST should exceed such upper limit the engine apparatus will run in a derating mode (i.e. with a reduced power).

Therefore the control of the conditions of the gas are based on the speed variation of the LPT 7. Among the other advantages, the control method allows to avoid the installation of the Waste-Gate (WG) usually installed downstream the high pressure turbine 8 to control the boost and the speed at the high pressure stage.

As above described, during the brake mode of the engine apparatus, beyond the control function of the over-speed of the main compressor 11, the method according to the invention implements also a control function of the back pressure (BP) which is based always on the regulation of the speed of LPT 7. Indeed the RSLPT is increased or decreased as a function of the comparison between the real value of BP with the pressure reference value BP* (with reference to the block diagram of Figure 7).

The regulation of the LPT speed according to the invention can be used also for compensating the aging and the compressor fouling in case of a circulation of blow-by gas. Indeed to compensate this conditions, the HPT requires more power for compensating the bad efficiency of the compressor and to maintain the condition EGT≤EGT*. The regulation of the speed of LPT 7 allows to provide more power to the HPT. If boost decreases over life time or if the exhaust EGT exceeds the reference value EGT*, then the LPT speed is decreased so that to shift the power to the HPT 6.

It has to be noted that, the LPT speed regulation also allows to improve generally the engine brake performance. Indeed for increasing engine brake torque, more boost is required al low engine speed. More boost increase the engine brake power because more mass-flow through the cylinders of the engine 1. A reduction of the speed of LPT 7 increases the power to HPT 6 and the boost. However also the speed of the main compressor 11 is increased. However, the over-speed of the main compressor 11 can be avoided by increasing the speed of the LPT 7 so as to shift the power from the HPT to LPT according to the purposed of the control method above described.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the scope of the invention are deemed to be covered by this invention.

Further implementation details will not be described, as the man skilled in the art is able to carry out the invention starting from the teaching of the above description.

## Claims

1. Method for controlling an engine apparatus, said apparatus comprising at least:

  - an internal combustion engine (1) having an air intake line (2) and a gases exhaust line (20);
  - at least a first compressor (11) arranged on said air intake line (2);
  - a high pressure turbine (6) arranged on said exhaust line, said high pressure turbine (6) being mechanically connected with said first compressor (11);
  - a power turbine (7) arranged downstream to said high pressure turbine (6) according to the flow direction of the exhaust gases;
  - an asynchronous machine (30) operatively connected to said power turbine (7), wherein said method comprises the steps of:

    A1) detecting the real value of the rotational speed of said high pressure turbine (6) by first speed detecting means (104) and detecting the real value of the rotational speed of said low pressure turbine (7) by second speed detecting means (106);
    A2) comparing the real value of said rotational speed of said high pressure turbine (6) with a first speed reference value (RSHPT*) and comparing said real value of said rotational speed of said power turbine (7) with a second speed reference value (RSLPT*);
    A3) if said real value of said high pressure turbine (6) is higher than a first speed reference value (RSHPT*), then increasing the rotational speed (RSLPT) of said power turbine (7), by means of said asynchronous machine (30), by keeping its value below a second reference value (RSLPT*) and until said real value of the rotational speed of said high pressure turbine (HPT) is less or equal of said first speed reference value (RSHPT*).

2. Method according to Claim 1, wherein during a fired mode of said engine apparatus, said method further comprises the steps of:

    B1) detecting the real value of the exhaust gas temperature (EGT) by first temperature detecting means (107) arranged upstream said high pressure turbine (6);
    B2) comparing said real value of said exhaust gas temperature with a first temperature reference value (EGT*);
    B3) if said real value of said exhaust gas temperature EGT) is higher than said first temperature reference value (EGT*), then decreasing the rotational speed RSLPT) of said power turbine (7), by means of said asynchronous machine (30), while keeping its value below said second speed reference value (RSLPT*).

3. Method according to claim 2, wherein during a fired mode of said engine apparatus, when said apparatus comprises a second compressor (5) arranged downstream said first compressor (11) along said air intake line (2), the control method comprises the step of activating said second compressor (5) if following the step B3), said real value of said exhaust gas temperature (EGT) is still higher than said first temperature reference value (EGT*).

4. Method according to claim 3, wherein when said engine apparatus comprises an After Treatment System (ATS), said method further comprises the steps of:

    C1) detecting the real value of the temperature of said ATS by second temperature detecting means (108) arranged along said exhaust line (20) before said ATS;
    C2) comparing the real value of the temperature of the ATS with a second temperature reference value (ATST*) characteristic of said ATS;

C3) if said real value of said second temperature of said ATS is higher than said second temperature reference value (ATST*), then decreasing the rotational speed of said power turbine (7), by means of said asynchronous machine (30), while keeping its value below said second speed reference value (RSLPT*).

5. Method according to claim 4, wherein during a fired mode of said engine apparatus, when said apparatus comprises a second compressor (5) arranged downstream said first compressor (11) along said air intake line (2), said method comprises the step of activating said second compressor (5), if following the step C3) said real value of said second temperature of said ATS is still higher than said second temperature reference value (ATST*).

6. Method according to any one of the claims 1-3, wherein during the fired mode of said engine apparatus, said method comprises the steps of:

D1) calculating the real value of an operative parameter characteristic of the efficiency of said power turbine (7);
D2) comparing the real value of said operative parameter with at least a first reference value corresponding to a required value of efficiency of said power turbine (7);
D3) if said real value of said operative parameter is lower than said reference value then varying the rotational speed of said power turbine (7), by means of said asynchronous machine (30), until said real value of said operative parameter is equal or higher of said reference value, and wherein the steps D1), D2), D3) are performed if at least:

- said real value of said exhaust gas temperature (EGT) is less or equal to said first temperature reference value (EGT*); and
- said real value of the rotational speed of said high pressure turbine (6) is less or equal of said first reference value (RSHPT*).

7. Method according to Claim 6, wherein said operative parameter is the Blade Speed ratio (BSR) of said power turbine (7) calculated according to the formula:

$$BSR = u/c$$

wherein:

- u is the radial speed of the impeller of said power turbine (7) calculated according to the formula:

$$u = (2 * \pi * n_{LPT}) * (D_{LPT}/2)$$

$n_{LPT}$ and $D_{LPT}$ being respectively the speed (rpm) and the external diameter of the impeller;
- c is characteristic of the conditions of the exhaust gases calculated according to the formula:

$$c = (2 * Cp * T * (1 - (P_3/P_4) \wedge ((1 - \gamma)/\gamma)))^{1/2}$$

$P_3$ and $P_4$ being respectively the pressure of the exhaust gases upstream and downstream said power turbine (7) and wherein T is the temperature of the exhaust gases before said power turbine (7).

8. Method according to Claim 7, wherein when said apparatus comprises a second compressor (5) arranged downstream said first compressor (11) along said air intake line (2), the control method comprises the step of activating said second compressor (5), if the real value of said Blade Speed Ratio (BSR) is higher than a reference value (BSR*) and until a reference value (BSR*) is reached.

9. Method according to any one of the claims 1 to 8, wherein when said engine apparatus operates according an engine brake mode, then the method further comprises the steps of:

E1) detecting the real value of pressure (BP) upstream said power turbine (7) by means of pressure detecting means arranged downstream said high pressure turbine (6);

E2) comparing said real value of said pressure (BP) with a pressure reference value (BP*);

E3) if said pressure (BP) is higher than said pressure reference value (BP*) then increasing the rotational speed of said power turbine (7) by keeping said rotational speed of said power turbine (7) below said second speed reference value (RSLPT*);

E4) if said pressure (BP) is lower than said pressure reference value (BP*) then decreasing said rotational speed of said power turbine (7) while maintaining said rotational speed of said power turbine (7) below said second speed reference value (RSLPT*),

and wherein said steps E1), E2),E3 and E4) are performed if the rotational speed of said high pressure turbine (6) is lower or equal to said first speed reference value (RSHPT*).

10. Method according to Claim 9, wherein when said apparatus comprises a second compressor (5) arranged downstream said first compressor (11) along said air intake line (2), said method comprises the step of activating said second compressor (5) if, following the step E4), said real value of said exhaust gas temperature (EGT) is still higher than a first temperature reference value (EGT*).

11. Method according to any of the claims 1 to 10, wherein when said engine apparatus comprises an After Treatment System (ATS) and when said engine apparatus operates according to a coasting mode, then the method further comprises the step of increasing said rotational speed of said power turbine (7) while keeping its value below said second speed reference value (RSLPT*), if:

- said exhaust gas temperature (EGT) is lower than said first temperature reference value (EGT*);
- said rotational speed of said high pressure turbine (6) is lower that said first speed reference value (RSHPT*); and
- said temperature of said ATS is lower than said second temperature reference value (ATST*).

12. Method according to claim 11, wherein when said apparatus comprises a second compressor (5) arranged downstream said first compressor (11) along said air intake line (2), then the method comprises the step of activating said second compressor (5) if following the increasing of said rotational speed of said power turbine (7) the exhaust gas temperature (EGT) is higher than said first temperature reference value (EGT*).

13. Turbo compound engine apparatus comprising:

- an internal combustion engine (1) having an air intake line (2) and a gases exhaust line (20);
- at least one compressor (11) on said air intake air;
- a high pressure turbine (6) arranged on said exhaust line, said high pressure turbine (6) being mechanically connected with said compressor (11);
- a power turbine (7) arranged downstream to said high pressure turbine (6),
- an asynchronous machine (30) operatively connected to said low pressure turbine (7),
- first speed detecting means (106) for detecting the rotational speed of said high pressure turbine (6),
- second speed detecting means for detecting the rotational speed of said power turbine (104);

wherein, if said real value of the rotational speed of said high pressure turbine (6) is higher than a first speed reference value (RSHPT*), then said asynchronous machine (30) increases the rotational speed of said power turbine (7) by keeping the rotational speed of said power turbine (7) below a second reference value (RSLPT*).

14. Apparatus according to Claim 13, wherein such apparatus comprises first temperature detecting means (107) for detecting the exhaust gas temperature (EGT) upstream said high pressure turbine, and wherein if the real value of said exhaust gas temperature (EGT) is higher than a first temperature reference value (EGT*), then said asynchronous machine (30) decreases the rotational speed of said power turbine (7) by keeping the rotational speed of said power turbine (7) below a second reference value (RSLPT*).

15. Apparatus according to Claim 14, wherein such apparatus comprises a second compressor (5) arranged downstream said first compressor (11) along said air intake line (2), and wherein said second compressor (5) is activated if, following the decreasing of said rotational speed of said power turbine (7), the value of said exhaust gas temperature (EGT) is higher than a first temperature reference value (EGT*).

16. Apparatus according to any one of the claims 13-15, wherein said apparatus further comprises an After Treatment System (ATS) and second temperature detecting means (108) for detecting the temperature of the ATS, and wherein said asynchronous machine (30) decreases the rotational speed of said power turbine (7), if the temperature of said ATS is higher than a second temperature reference value (ATST*).

17. Apparatus according to Claim 16, wherein such apparatus comprises a second compressor (5) arranged downstream said first compressor (11) along said air intake line (2), and wherein said second compressor (5) is activated if, following the decreasing of said rotational speed of said power turbine (7), the value of the temperature of the ATS is higher than said second temperature reference value (ATST*).

18. Apparatus according to any one of the claims 13 to 17, wherein said apparatus further comprises pressure detecting means (101, 102) for detecting the pressure of the exhaust gases upstream and downstream said power turbine (7) and third temperature detecting means (105) for detecting the temperature of the exhaust gas upstream said power turbine, wherein said asynchronous machine (30) varies the rotational speed of said power turbine (7) as a function of the real value of an operative parameter characteristic of the efficiency of said power turbine (7), such variation being performed if:

said real value of said exhaust gas temperature (EGT) is less or equal to said first temperature reference value (EGT*); and

- said real value of the rotational speed of said high pressure turbine (6) is less or equal of said first reference value (RSHPT*);
and wherein said operative parameter is the Blade Speed ratio (BSR) of said power turbine (7) calculated according to the formula:

$$\mathtt{BSR=\ u/c}$$

wherein:
- u is the radial speed of the impeller of said power turbine (7) calculated according to the formula:

$$\mathtt{u=\ (2*\pi*n_{LPT})*(D_{LPT}/2)}$$

$n_{LPT}$ and $D_{LPT}$ being respectively the rotational speed (rpm) and the external diameter of the impeller;
- c is characteristic of the conditions of the exhaust gases calculated according to the formula:

$$\mathtt{c=(2*Cp*T*(1-(P_3/P_4)^{\wedge}((1-\gamma)/\gamma)))^{\wedge 1/2}}$$

$P_3$ and $P_4$ being respectively the pressure of the exhaust gases upstream and downstream said power turbine (7) and wherein T is the temperature of the exhaust gases upstream said power turbine (7).

19. Apparatus according to claim 18, wherein said apparatus comprises a second compressor (5) arranged downstream said first compressor (11) along said air intake line (2) and wherein said second compressor (5) is activated is the real value of said Blade Speed Ratio (BSR) is higher than said reference value (BSR*).

20. Apparatus according to any of the claims 13-19, wherein said apparatus comprises pressure detecting means (109) for detecting the real value of the pressure (BP) upstream said power turbine (7), and wherein said asynchronous machine (30) increases the rotational speed of said power turbine (7) if said pressure (BP) is higher than a pressure reference value (BP*) and wherein said asynchronous machine (30) decreases the rotational speed of said power turbine (7) if said pressure (BP) is lower than said pressure reference value (BP*).

21. Apparatus according to Claim 20, wherein said apparatus comprises a second compressor (5) arranged downstream said first compressor (11) along said air intake line (2) and wherein said second compressor (5) is activated if, following the decreasing of said rotational speed of said power turbine (7), the real value of said pressure (BP) is lower than said reference value (BP*).

22. Apparatus according to Claim 14, wherein said apparatus further comprises an After Treatment System (ATS) and second temperature means (108) for detecting the temperature of said ATS, wherein when said engine apparatus operating according to a coasting mode, then the asynchronous machine (30) increases the rotational speed of said power turbine (7) if said exhaust gas temperature (EGT) is lower that said first temperature reference value (EGT*) and if said temperature of said ATS is lower than said second temperature reference value (ATST*).

23. Apparatus according to Claim 22, wherein said apparatus comprises a second compressor (5) arranged downstream said first compressor (11) along said air intake line (2) and wherein, during said coasting mode, said second compressor (5) is activated if, following the increasing of said rotational speed of said power turbine (7), the real value of said exhaust gas temperature (EGT) is higher than said first temperature reference value (EGT*).

24. Vehicle especially an industrial vehicle comprising an apparatus according to one of the claim from 13 to 23.

25. A computer program comprising computer program code means adapted to perform all the steps of any of the claims 1 to 12, when said program is run on a computer.

26. A computer readable medium having a program recorded thereon, said computer readable medium comprising computer program code means adapted to perform all the steps of any of the claims 1 to 12, when said program is run on a computer.

**Patentansprüche**

1. Verfahren zum Steuern einer Kraftmaschinenvoruchtung, wobei die Vorrichtung wenigstens Folgendes umfasst:

- eine Brennkraftmaschine (1), die eine Lufteinlassleitung (2) und eine Gasauslassleitung (20) besitzt;
- wenigstens einen ersten Kompressor (11), der an der Lufteinlassleitung (2) angeordnet ist;
- eine Hochdruckturbine (6), die an der Abgasleitung angeordnet ist, wobei die Hochdruckturbine (6) mit dem ersten Kompressor (11) mechanisch verbunden ist;
- eine Leistungsturbine (7), die stromabseitig der Hochdruckturbine (6) in Strömungsrichtung der Abgase angeordnet ist;
- eine Asynchronmaschine (30), die mit der Leistungsturbine (7) betriebstechnisch verbunden ist,
wobei das Verfahren die folgenden Schritte umfasst:

A1) Detektieren des Istwerts der Drehzahl der Hochdruckturbine (6) durch erste Drehzahldetektionsmittel (104) und Detektieren des Istwerts der Drehzahl der Niederdruckturbine (7) durch zweite Drehzahldetektionsmittel (106);
A2) Vergleichen des Istwerts der Drehzahl der Hochdruckturbine (6) mit einem ersten Drehzahlsollwert (RSHPT*) und Vergleichen des Istwerts der Drehzahl der Leistungsturbine (7) mit einem zweiten Drehzahlsollwert (RSLPT*);
A3) falls der Istwert der Hochdruckturbine (6) höher als ein erster Drehzahlsollwert (RSHPT*) ist, Erhöhen der Drehzahl (RSLPT) der Leistungsturbine (7) mittels der Asynchronmaschine (30), wobei ihr Wert unterhalb eines zweiten Sollwerts (RSLPT*) gehalten wird, bis der Istwert der Drehzahl der Hochdruckturbine (HPT) kleiner oder gleich dem ersten Drehzahlsollwert (RSHPT*) ist.

2. Verfahren nach Anspruch 1, wobei während einer Zündbetriebsart der Kraftmaschinenvorrichtung das Verfahren ferner die folgenden Schritte umfasst:

B1) Detektieren des Istwerts der Abgastemperatur (EGT) durch erste Temperaturdetektionsmittel (107), die stromaufseitig der Hochdruckturbine (6) angeordnet sind;
B2) Vergleichen des Istwerts der Abgastemperatur mit einem ersten Temperatursollwert (EGT*);
B3) falls der Istwert der Abgastemperatur (EGT) höher als der erste Temperatursollwert (EGT*) ist, Absenken der Drehzahl (RSLPT) der Leistungsturbine (7) mittels der Asynchronmaschine (30), wobei ihr Wert unter dem zweiten Drehzahlsollwert (RSLPT*) gehalten wird.

3. Verfahren nach Anspruch 2, wobei während einer Zündbetriebsart der Kraftmaschinenvorrichtung dann, wenn die Vorrichtung einen zweiten Kompressor (5) umfasst, der stromabseitig des ersten Kompressors (11) längs der Lufteinlassleitung (2) angeordnet ist, das Steuerverfahren den Schritt des Aktivierens des zweiten Kompressors (5) umfasst, falls nach dem Schritt B3) der Istwert der Abgastemperatur (EGT) noch immer höher als der erste Temperatursollwert (EGT*) ist.

4. Verfahren nach Anspruch 3, wobei dann, wenn die Kraftmaschinenvorrichtung ein Nachbehandlungssystem (ATS) umfasst, das Verfahren ferner die folgenden Schritte umfasst:

C1) Detektieren des Istwerts der Temperatur des ATS durch zweite Temperaturdetektionsmittel (108), die längs der Abgasleitung (20) vor dem ATS angeordnet sind;
C2) Vergleichen des Istwerts der Temperatur des ATS mit einem zweiten Temperatursollwert (ATST*), der für das ATS charakteristisch ist;
C3) falls der Istwert der zweiten Temperatur des ATS höher als der zweite Temperatursollwert (ATST*) ist, Absenken der Drehzahl der Leistungsturbine (7) mittels der Asynchronmaschine (30), wobei ihr Wert unter dem zweiten Drehzahlsollwert (RSLPT*) gehalten wird.

5. Verfahren nach Anspruch 4, wobei während einer Zündbetriebsart der Kraftmaschinenvorrichtung dann, wenn die Vorrichtung einen zweiten Kompressor (5) umfasst, der stromabseitig des ersten Kompressors (11) längs der Lufteinlassleitung (2) angeordnet ist, das Verfahren den Schritt des Aktivierens des zweiten Kompressors (5) umfasst, falls nach dem Schritt C3) der Istwert der zweiten Temperatur des ATS noch immer höher als der zweite Temperatursollwert (ATST*) ist.

6. Verfahren nach einem der Ansprüche 1-3, wobei während der Zündbetriebsart der Kraftmaschinenvorrichtung das Verfahren die folgenden Schritte umfasst:

D1) Berechnen des Istwerts eines Betriebsparameters, der für den Wirkungsgrad der Leistungsturbine (7) charakteristisch ist;
D2) Vergleichen des Istwerts des Betriebsparameters mit wenigstens einem ersten Sollwert, der einem erforderlichen Wert des Wirkungsgrades der Leistungsturbine (7) entspricht;
D3) falls der Istwert des Betriebsparameters niedriger als der Sollwert ist, Verändern der Drehzahl der Leistungsturbine (7) mittels der Asynchronmaschine (30), bis der Istwert des Betriebsparameters gleich oder größer als der Sollwert ist,
wobei die Schritte D1), D2) und D3 ausgeführt werden, falls zumindest:

- der Istwert der Abgastemperatur (EGT) kleiner oder gleich den ersten Temperatursollwert (EGT*) ist; und
- der Istwert der Drehzahl der Hochdruckturbine (6) kleiner oder gleich dem ersten Sollwert (RSHPT*) ist.

7. Verfahren nach Anspruch 6, wobei der Betriebsparameter das Schaufeldrehzahlverhältnis (BSR) der Leistungsturbine (7) ist, das durch die folgende Formel berechnet wird:

$$\mathrm{BSR} = u/c$$

wobei:

- $u$ die Radialgeschwindigkeit des Turbinenrades der Leistungsturbine (7) ist, die gemäß der folgenden Formel berechnet wird:

$$u = 2 \cdot \pi \cdot n_{LPT} \cdot \frac{D_{LPT}}{2}$$

wobei $n_{LPT}$ und $D_{LPT}$ die Drehzahl (min⁻¹) bzw. der Außendurchmesser des Turbinenrades sind;
- $c$ für die Bedingungen der Abgase charakteristisch ist und gemäß der folgenden Formel berechnet wird:

$$c = \left( 2 \cdot Cp \cdot T \cdot \left( 1 - \frac{P_3}{P_4} \right) \right)^{\sqrt{\frac{1-\gamma}{\gamma}}}$$

wobei $P_3$ und $P_4$ der Druck der Abgase stromaufseitig bzw. stromabseitig der Leistungsturbine (7) sind und wobei T die Temperatur der Abgase vor der Leistungsturbine (7) sind.

8. Verfahren nach Anspruch 7, wobei dann, wenn die Vorrichtung einen zweiten Kompressor (5) umfasst, der stromabseitig des ersten Kompressors (11) längs der Lufteinlassleistung (2) angeordnet ist, das Steuerverfahren den Schritt des Aktivierens des zweiten Kompressors (5) umfasst, falls der Istwert des Schaufeldrehzahlverhältnisses (BSR) höher als ein Sollwert (BSR*) ist und bis ein Sollwert (BSR*) erreicht wird.

9. Verfahren nach einem der Ansprüche 1 bis 8, wobei dann, wenn die Kraftmaschinenvorrichtung in einer Kraftmaschinenbremsbetriebsart arbeitet, das Verfahren ferner die folgenden Schritte umfasst:

E1) Detektieren des Istwerts des Drucks (BP) stromaufseitig der Leistungsturbine (7) durch Druckdetektionsmittel, die stromabseitig der Hochdruckturbine (6) angeordnet sind;
E2) Vergleichen des Istwerts des Drucks (BP) mit einem Drucksollwert (BP*);
E3) falls der Druck (BP) höher als der Drucksollwert (BP*) ist, Erhöhen der Drehzahl der Leistungsturbine (7), wobei die Drehzahl der Leistungsturbine (7) unter dem zweiten Drehzahlsollwert (RSLPT*) gehalten wird;
E4) falls der Druck (BP) niedriger als der Drucksollwert (BP*) ist, Absenken der Drehzahl der Leistungsturbine (7), wobei die Drehzahl der Leistungsturbine (7) unter dem zweiten Drehzahlsollwert (RSLPT*) gehalten wird, und wobei die Schritte E1), E2), E3) und E4) ausgeführt werden, falls die Drehzahl der Hochdruckturbine (6) kleiner oder gleich dem ersten Drehzahlsollwert (RSHPT*) ist.

10. Verfahren nach Anspruch 9, wobei dann, wenn die Vorrichtung einen zweiten Kompressor (5) umfasst, der stromabseitig des ersten Kompressors (11) längs der Lufteinlassleitung (2) angeordnet ist, das Verfahren den Schritt des Aktivierens des zweiten Kompressors (5) umfasst, falls nach dem Schritt E4) der Istwert der Abgastemperatur (EGT) noch immer höher als ein erster Temperatursollwert (EGT*) ist.

11. Verfahren nach einem der Ansprüche 1 bis 10, wobei dann, wenn die Kraftmaschinenvorrichtung ein Nachbehandlungssystem (ATS) umfasst und wenn die Kraftmaschinenvorrichtung in einer Ausrollbetriebsart arbeitet, das Verfahren ferner den Schritt des Erhöhens der Drehzahl der Leistungsturbine (7) umfasst, wobei ihr Wert unter dem zweiten Drehzahlsollwert (RSLPT*) gehalten wird, falls:

- die Abgastemperatur (EGT) niedriger als der erste Temperatursollwert (EGT*) ist;
die Drehzahl der Hochdruckturbine (6) niedriger als der erste Drehzahlsollwert (RSHPT*) ist; und
- die Temperatur des ATS niedriger als der zweite Temperatursollwert (ATST*) ist.

12. Verfahren nach Anspruch 11, wobei dann, wenn die Vorrichtung einen zweiten Kompressor (5) umfasst, der stromabseitig des ersten Kompressors (11) längs der Lufteinlassleitung (2) angeordnet ist, das Verfahren den Schritt des Aktivierens des zweiten Kompressors (5) umfasst, falls nach dem Erhöhen der Drehzahl der Leistungsturbine (7) die Abgastemperatur (EGT) höher als der erste Temperatursollwert (EGT*) ist.

13. Turboverbund-Kraftmaschinenvoruchtung, die Folgendes umfasst:

- eine Brennkraftmaschine (1) mit einer Lufteinlassleitung (2) und einer Gasauslassleitung (20);
- wenigstens einen Kompressor (11) an der Lufteinlassleitung;
- eine Hochdruckturbine (6), die an der Auslassleitung angeordnet ist, wobei die Hochdruckturbine (6) mit dem Kompressor (11) mechanisch verbunden ist;
- eine Leistungsturbine (7), die stromabseitig der Hochdruckturbine (6) angeordnet ist,
- eine Asynchronmaschine (30), die mit der Niederdruckturbine (7) betriebstechnisch verbunden ist,
- erste Drehzahldetektionsmittel (106) zum Detektieren der Drehzahl der Hochdruckturbine (6),
- zweite Drehzahldetektionsmittel zum Detektieren der Drehzahl der Leistungsturbine (104);
wobei dann, wenn der Istwert der Drehzahl der Hochdruckturbine (6) höher als ein erster Drehzahlsollwert (RSHPT*) ist, die Asynchronmaschine (30) die Drehzahl der Leistungsturbine (7) erhöht und dabei die Drehzahl der Leistungsturbine (7) unter einem zweiten Sollwert (RSLPT*) hält.

**14.** Vorrichtung nach Anspruch 13, wobei diese Vorrichtung erste Temperaturdetektionsmittel (107) zum Detektieren der Abgastemperatur (EGT) stromaufseitig der Hochdruckturbine umfasst, wobei dann, wenn der Istwert der Abgastemperatur (EGT) höher als ein erster Temperatursollwert (EGT*) ist, die Asynchronmaschine (30) die Drehzahl der Leistungsturbine (7) absenkt und dabei die Drehzahl der Leistungsturbine (7) unter einem zweiten Sollwert (RSLPT*) hält.

**15.** Vorrichtung nach Anspruch 14, wobei diese Vorrichtung einen zweiten Kompressor (5) umfasst, der stromabseitig des ersten Kompressors (11) längs der Lufteinlassleitung (2) angeordnet ist, und wobei der zweite Kompressor (5) aktiviert wird, falls nach dem Absenken der Drehzahl der Leistungsturbine (7) der Wert der Abgastemperatur (EGT) höher als ein erster Temperatursollwert (EGT*) ist.

**16.** Vorrichtung nach einem der Ansprüche 13-15, wobei die Vorrichtung ferner ein Nachbehandlungssystem (ATS) und zweite Temperaturdetektionsmittel (108) zum Detektieren der Temperatur des ATS umfasst und wobei die Asynchronmaschine (30) die Drehzahl der Leistungsturbine (7) senkt, falls die Temperatur des ATS höher als ein zweiter Temperatursollwert (ATST*) ist.

**17.** Vorrichtung nach Anspruch 16, wobei diese Vorrichtung einen zweiten Kompressor (5) umfasst, der stromabseitig des ersten Kompressors (11) längs der Lufteinlassleitung (2) angeordnet ist, und wobei der zweite Kompressor (5) aktiviert wird, wenn nach dem Absenken der Drehzahl der Leistungsturbine (7) der Wert der Temperatur des ATS höher als der zweite Temperatursollwert (ATST*) ist.

**18.** Vorrichtung nach einem der Ansprüche 13 bis 17, wobei die Vorrichtung ferner Druckdetektionsmittel (101, 102) zum Detektieren des Drucks der Abgase stromaufseitig und stromabseitig der Leistungsturbine (7) und dritte Temperaturdetektionsmittel (105) zum Detektieren der Temperatur des Abgases stromaufseitig der Leistungsturbine umfasst, wobei die Asynchronmaschine (30) die Drehzahl der Leistungsturbine (7) als Funktion des Istwerts eines Betriebsparameters, der für den Wirkungsgrad der Leistungsturbine (7) charakteristisch ist, verändert, wobei eine solche Veränderung ausgeführt wird, falls:

der Istwert der Abgastemperatur (EGT) kleiner oder gleich dem ersten Temperatursollwert (EGT*) ist; und

- der Istwert der Drehzahl der Hochdruckturbine (6) kleiner oder gleich dem ersten Sollwert (RSHPT*) ist; und wobei der Betriebsparameter das Schaufeldrehzahlverhältnis (BSR) der Leistungsturbine (7) ist, das durch die folgende Formel berechnet wird:

$$\mathrm{BSR} = u/c$$

wobei:
- $u$ die Radialgeschwindigkeit des Turbinenrades der Leistungsturbine (7) ist, die gemäß der folgenden Formel berechnet wird:

$$u = 2 \cdot \pi \cdot n_{LPT} \cdot \frac{D_{LPT}}{2}$$

wobei $n_{LPT}$ und $D_{LPT}$ die Drehzahl (min⁻¹) bzw. der Außendurchmesser des Turbinenrades sind;
- $c$ für die Bedingungen der Abgase charakteristisch ist und gemäß der folgenden Formel berechnet wird:

$$c = \left( 2 \cdot Cp \cdot T \cdot \left( 1 - \frac{P_3}{P_4} \right) \right)^{\sqrt{\frac{1-\gamma}{\gamma}}}$$

wobei $P_3$ und $P_4$ der Druck der Abgase stromaufseitig bzw. stromabseitig der Leistungsturbine (7) sind und wobei T die Temperatur der Abgase vor der Leistungsturbine (7) sind.

19. Vorrichtung nach Anspruch 18, wobei die Vorrichtung einen zweiten Kompressor (5) umfasst, der stromabseitig des ersten Kompressors (11) längs der Lufteinlassleitung (2) angeordnet ist und wobei der zweite Kompressor (5) aktiviert wird, falls der Istwert des Schaufeldrehzahlverhältnisses (BSR) höher als der Sollwert (BSR*) ist.

20. Vorrichtung nach einem der Ansprüche 13-19, wobei die Vorrichtung Druckdetektionsmittel (109) zum Detektieren des Istwerts des Drucks (BP) stromaufseitig der Leistungsturbine (7) umfasst und wobei die Asynchronmaschine (30) die Drehzahl der Leistungsturbine (7) erhöht, falls der Druck (BP) höher als ein Drucksollwert (BP*) ist, und wobei die Asynchronmaschine (30) die Drehzahl der Leistungsturbine (7) absenkt, falls der Druck (BP) niedriger als der Drucksollwelt (BP*) ist.

21. Vorrichtung nach Anspruch 20, wobei die Vorrichtung einen zweiten Kompressor (5) umfasst, der stromabseitig des ersten Kompressors (11) längs der Lufteinlassleitung (2) angeordnet ist, und wobei der zweite Kompressor (5) aktiviert wird, falls nach dem Absenken der Drehzahl der Leistungsturbine (7) der Istwert des Drucks (BP) niedriger als der Sollwert (BP*) ist.

22. Vorrichtung nach Anspruch 14, wobei die Vorrichtung ferner ein Nachbehandlungssystem (ATS) und zweite Temperatmmittel (108) zum Detektieren der Temperatur des ATS umfasst, wobei dann, wenn die Kraftmaschinenvorrichtung in einer Ausrollbetriebsart arbeitet, die Asynchronmaschine (30) die Drehzahl der Leistungsturbine (7) erhöht, falls die Abgastemperatur (EGT) niedriger als der erste Temperatursollwert (EGT*) ist und falls die Temperatur des ATS niedriger als der zweite Temperatursollwert (ATST*) ist.

23. Vorrichtung nach Anspruch 22, wobei die Vorrichtung einen zweiten Kompressor (5) umfasst, der stromabseitig des ersten Kompressors (11) längs der Lufteinlassleitung (2) angeordnet ist, und wobei während der Ausrollbetriebsart der zweite Kompressor (5) aktiviert wird, falls nach dem Erhöhen der Drehzahl der Leistungsturbine (7) der Istwert der Abgastemperatur (EGT) höher als der erste Temperatursollwert (EGT*) ist.

24. Fahrzeug, insbesondere gewerbliches Fahrzeug, das eine Vorrichtung nach einem der Ansprüche 13 bis 23 enthält.

25. Computerprogramm, das Computerprogrammcodemittel enthält, die dafür ausgelegt sind, sämtliche Schritte nach einem der Ansprüche 1 bis 12 auszuführen, wenn das Programm auf einem Computer läuft.

26. Computerlesbares Medium, auf das ein Programm aufgezeichnet ist, wobei das computerlesbare Medium Computerprogrammcodemittel enthält, die dafür ausgelegt sind, sämtliche Schritte nach einem der Ansprüche 1 bis 12 auszuführen, wenn das Programm auf einem Computer läuft.

**Revendications**

1. Méthode de commande d'un appareil à moteur, ledit appareil comprenant au moins :

   - un moteur à combustion interne (1) ayant une conduite d'admission d'air (2) et une conduite d'échappement des gaz (20) ;
   - au moins un premier compresseur (11) disposé sur ladite conduite d'admission d'air (2) ;
   - une turbine haute pression (6) disposée sur ladite conduite d'échappement, ladite turbine haute pression (6) étant mécaniquement connectée audit premier compresseur (11) ;
   - une turbine de puissance (7) disposée en aval de ladite turbine haute pression (6) selon la direction de l'écoulement des gaz d'échappement ;
   - une machine asynchrone (30) opérationnellement raccordée à ladite turbine de puissance (7),
   dans laquelle ladite méthode comprend les étapes :

      A1) de détection de la valeur réelle de la vitesse de rotation de ladite turbine haute pression (6) par de premiers moyens de détection de vitesse (104) et de détection de la valeur réelle de la vitesse de rotation de ladite turbine basse pression (7) par de seconds moyens de détection de vitesse (106) ;
      A2) de comparaison de la valeur réelle de ladite vitesse de rotation de ladite turbine haute pression (6) avec une première valeur de référence de vitesse (RSHPT*) et de comparaison de ladite valeur réelle de ladite vitesse de rotation de ladite turbine de puissance (7) avec une seconde valeur de référence de vitesse (RSLPT*) ;
A3) puis, si ladite valeur réelle de ladite turbine haute pression (6) est supérieure à une première valeur de référence de vitesse (RSHPT*), d'augmentation de la vitesse de rotation (RSLPT) de ladite turbine de puissance (7), au moyen de ladite machine asynchrone (30), en maintenant sa valeur en dessous d'une seconde valeur de référence (RSLPT*), et jusqu'à ce que ladite valeur réelle de la vitesse de rotation de ladite turbine haute pression (HPT) soit inférieure ou égale à ladite première valeur de référence de vitesse (RSHPT*).

2. Méthode selon la revendication 1, dans laquelle, pendant un mode alimenté dudit appareil à moteur, ladite méthode comprend en outre les étapes :

B1) de détection de la valeur réelle de la température des gaz d'échappement (EGT) par de premiers moyens de détection de température (107) disposés en amont de ladite turbine haute pression (6) ;
B2) de comparaison de ladite valeur réelle de ladite température des gaz d'échappement avec une première valeur de référence de température (EGT*) :

B3) puis, si ladite valeur réelle de ladite température des gaz d'échappement (EGT) est supérieure à ladite première valeur de référence de température (EGT*), de diminution de la vitesse de rotation (RSLPT) de ladite turbine de puissance (7), au moyen de ladite machine asynchrone (30), tout en maintenant sa valeur en dessous de ladite seconde valeur de référence de vitesse (RSLPT*).

3. Méthode selon la revendication 2, dans laquelle, pendant un mode alimenté dudit appareil à moteur, lorsque ledit appareil comprend un second compresseur (5) disposé en aval dudit premier compresseur (11) le long de ladite conduite d'admission d'air (2), la méthode de commande comprend l'étape d'activation dudit second compresseur (5), si, suite à l'étape B3), ladite valeur réelle de ladite température de gaz d'échappement (EGT) est toujours supérieure à ladite première valeur de référence de température (EGT*).

4. Méthode selon la revendication 3, dans laquelle, lorsque ledit appareil à moteur comprend un Système après-traitement (ATS), ladite méthode comprend en outre les étapes :

C1) de détection de la valeur réelle de la température dudit ATS par de seconds moyens de détection de température (108) disposés le long de ladite conduite d'échappement (20) avant ledit ATS ;
C2) de comparaison de la valeur réelle de la température de l'ATS avec une seconde valeur de référence de température (ATST*) caractéristique dudit ATS ;
C3) puis, si ladite valeur réelle de ladite seconde température dudit ATS est supérieure à ladite seconde valeur de référence de température (ATST*), de diminution de la vitesse de rotation de ladite turbine de puissance (7), au moyen de ladite machine asynchrone (30), tout en maintenant sa valeur en dessous de ladite seconde valeur de référence de vitesse (RSLPT*).

5. Méthode selon la revendication 4, dans laquelle, pendant un mode alimenté dudit appareil à moteur, lorsque ledit appareil comprend un second compresseur (5) disposé en aval dudit premier compresseur (11) le long de ladite conduite d'admission d'air (2), ladite méthode comprend l'étape d'activation dudit second compresseur (5), si, suite à l'étape C3), ladite valeur réelle de ladite seconde température dudit ATS est toujours supérieure à ladite seconde valeur de référence de la température (ATST*).

6. Méthode selon l'une quelconque des revendications 1-3, dans laquelle, pendant le mode alimenté dudit appareil à moteur, ladite méthode comprend les étapes :

D1) de calcul de la valeur réelle d'un paramètre opérationnel caractéristique de l'efficacité de ladite turbine de puissance (7) ;
D2) de comparaison de la valeur réelle dudit paramètre opérationnel avec au moins une première valeur de référence correspondant à une valeur requise d'efficacité de ladite turbine de puissance (7) ;
D3) puis, si ladite valeur réelle dudit paramètre opérationnel est inférieure à ladite valeur de référence, de modification de la vitesse de rotation de ladite turbine de puissance (7), au moyen de ladite machine asynchrone (30), jusqu'à ce que ladite valeur réelle dudit paramètre opérationnel soit égale ou supérieure à ladite valeur de référence,
et dans laquelle les étapes D1), D2), D3) sont réalisées si au moins :
- ladite valeur réelle de ladite température de gaz d'échappement (EGT) est inférieure ou égale à ladite première valeur de référence de température (EGT*) ; et
- ladite valeur réelle de la vitesse de rotation de ladite turbine haute pression (6) est inférieure ou égale à ladite première valeur de référence (RSHPT*).

**7.** Méthode selon la revendication 6, dans laquelle ledit paramètre opérationnel est le rapport de vitesse de pale (BSR) de ladite turbine de puissance (7), calculé selon la formule :

$$BSR = u/c$$

où :

- u est la vitesse radiale de la roue à palette de ladite turbine de puissance (7), calculée selon la formule :

$$u = (2*\pi*n_{LPT})*(D_{LPT}/2)$$

$n_{LPT}$ et $D_{LPT}$ étant respectivement la vitesse (trs/mn) et le diamètre extérieur de la roue à palette ;
- c est caractéristique des conditions des gaz d'échappement, calculé selon la formule :

$$c = (2*Cp*T*(1-(P_3/P_4)^{((1-\gamma)/\gamma)}))^{1/2}$$

$P_3$ et $P_4$ étant respectivement la pression des gaz d'échappement en amont et en aval de ladite turbine de puissance (7) et dans laquelle T est la température des gaz d'échappement avant ladite turbine de puissance (7).

**8.** Méthode selon la revendication 7, dans laquelle, lorsque ledit appareil comprend un second compresseur (5) disposé en aval dudit premier compresseur (11) le long de ladite conduite d'admission d'air (2), la méthode de commande comprend l'étape d'activation dudit second compresseur (5), si la valeur réelle dudit Rapport de Vitesse de Pale (BSR) est supérieure à une valeur de référence (BSR*) et jusqu'à ce qu'une valeur de référence (BSR*) soit atteinte.

**9.** Méthode selon l'une quelconque des revendications 1 à 8, dans laquelle, lorsque ledit appareil à moteur fonctionne selon un mode de freinage de moteur, alors la méthode comprend en outre les étapes :

E1) de détecter de la valeur réelle de pression (BP) en amont de ladite turbine de puissance (7), à l'aide de moyens de détection de pression disposés en aval de ladite turbine haute pression (6) ;
E2) de comparaison de ladite valeur réelle de ladite pression (BP) avec une valeur de référence de pression (BP*) ;
E3) puis, si ladite pression (BP) est supérieure à ladite valeur de référence de pression (BP*), d'augmentation de la vitesse de rotation de ladite turbine de puissance (7) en maintenant ladite vitesse de rotation de ladite turbine de puissance (7) en dessous de ladite seconde valeur de référence (RSLPT*) ;
E4) puis, si ladite pression (BP) est inférieure à ladite valeur de référence de pression (BP*), de diminution de ladite vitesse de rotation de ladite turbine de puissance (7) tout en maintenant ladite vitesse de rotation de ladite turbine de puissance (7) en dessous de ladite seconde valeur de référence de vitesse (RSLPT*),
et dans laquelle lesdites étapes E1), E2), E3) et E4) sont réalisées si la vitesse de rotation de ladite turbine haute pression (6) est inférieure ou égale à ladite première valeur de référence de vitesse (RSHPT*).

**10.** Méthode selon la revendication 9, dans laquelle, lorsque ledit appareil comprend un second compresseur (5) disposé en aval dudit premier compresseur (11) le long de ladite conduite d'admission d'air (2), ladite méthode comprend l'étape d'activation dudit second compresseur (5), si, suite à l'étape E4), ladite valeur réelle de ladite température de gaz d'échappement (EGT) est toujours supérieure à une première valeur de référence de température (EGT*).

**11.** Méthode selon l'une quelconque des revendications 1 à 10, dans laquelle, lorsque ledit appareil à moteur comprend un Système Après-Traitement (ATS) et lorsque ledit appareil à moteur fonctionne selon un mode de glissement, alors la méthode comprend en outre l'étape d'augmentation de ladite vitesse de rotation de ladite turbine de puissance (7) tout en maintenant sa valeur en dessous de ladite seconde valeur de référence de vitesse (RSLPT*), si :

- ladite température de gaz d'échappement (EGT) est inférieure à ladite première valeur de référence de température (EGT*) ;
- ladite vitesse de rotation de ladite turbine haute pression (6) est inférieure à ladite première valeur de référence de vitesse (RSHPT*) ; et
- ladite température dudit ATS est inférieure à ladite seconde valeur de référence de température (ATST*).

**12.** Méthode selon la revendication 11, dans laquelle, lorsque ledit appareil comprend un second compresseur (5) disposé en aval dudit premier compresseur (11) le long de ladite conduite d'admission d'air (2), alors la méthode comprend l'étape d'activation dudit second compresseur (5), si, suite à l'augmentation de ladite vitesse de rotation de ladite turbine de puissance (7), la température des gaz d'échappement (EGT) est supérieure à ladite première valeur de référence de température (EGT*).

**13.** Appareil à moteur à composé turbo comprenant :

- un moteur à combustion interne (1) ayant une conduite d'admission d'air (2) et une conduite d'échappement des gaz (20) ;
- au moins un compresseur (11) sur ledit air d'admission d'air ;
- une turbine haute pression (6) disposée sur ladite conduite d'échappement, ladite turbine haute pression (6) étant mécaniquement raccordée audit compresseur (11) ;
- une turbine de puissance (7) disposée en aval de ladite turbine haute pression (6),
- une machine asynchrone (30) opérationnellement raccordée à ladite turbine basse pression (7),
- de premiers moyens de détection de vitesse (106) pour détecter la vitesse de rotation de ladite turbine haute pression (6),
- de seconds moyens de détection de vitesse pour détecter la vitesse de rotation de ladite turbine de puissance (104) ;
dans laquelle, si ladite valeur réelle de la vitesse de rotation de ladite turbine haute pression (6) est supérieure à une première valeur de référence de vitesse (RSHPT*), alors ladite machine asynchrone (30) augmente la vitesse de rotation de ladite turbine de puissance (7) en maintenant la vitesse de rotation de ladite turbine de puissance (7) en dessous d'une seconde valeur de référence (RSLPT*).

**14.** Appareil selon la revendication 13, dans lequel ledit appareil comprend de premiers moyens de détection de température (107) pour détecter la température des gaz d'échappement (EGT) en amont de ladite turbine haute pression, et dans lequel, si la valeur réelle de ladite température des gaz d'échappement (EGT) est supérieure à une première valeur de référence de température (EGT*), alors ladite machine asynchrone (30) diminue la vitesse de rotation de ladite turbine de puissance (7) en maintenant la vitesse de rotation de ladite turbine de puissance (7) en dessous d'une seconde valeur de référence (RSLPT*).

**15.** Appareil selon la revendication 14, dans lequel cet appareil comprend un second compresseur (5) disposé en aval dudit premier compresseur (11) le long de ladite conduite d'admission d'air (2) et dans lequel ledit second compresseur (5) est activé si, suite à la diminution de ladite vitesse de rotation de ladite turbine de puissance (7), la valeur de ladite température de gaz d'échappement (EGT) est supérieure à une première valeur de référence de température (EGT*).

**16.** Appareil selon l'une quelconque des revendications 13-15, dans lequel ledit appareil comprend en outre un Système Après-Traitement (ATS) et de seconds moyens de détection de température (108) pour détecter la température de l'ATS, et dans lequel ladite machine asynchrone (30) diminue la vitesse de rotation de ladite turbine de puissance (7), si la température dudit ATS est supérieure à une seconde valeur de référence de la température (ATST*).

**17.** Appareil selon la revendication 16, dans lequel cet appareil comprend un second compresseur (5) disposé en aval dudit premier compresseur (11) le long de ladite conduite d'admission d'air (2) et dans lequel ledit second compresseur (5) est activé si, suite à la diminution de ladite vitesse de rotation de ladite turbine de puissance (7), la valeur de la température de l'ATS est supérieure à ladite seconde valeur de référence de la température (ATST*).

**18.** Appareil selon l'une quelconque des revendications 13 à 17, dans lequel ledit appareil comprend en outre des moyens de détection de pression (101, 102) pour détecter la pression des gaz d'échappement en amont et en aval de ladite turbine de puissance (7) et de troisièmes moyens de détection de température (105) pour détecter la température des gaz d'échappement en amont de ladite turbine de puissance, dans lequel ladite machine asynchrone (30) modifie la vitesse de rotation de ladite turbine de puissance (7) en fonction de la valeur réelle d'un paramètre opérationnel caractéristique de l'efficacité de ladite turbine de puissance (7), ladite variation étant réalisée si :

ladite valeur réelle de ladite température des gaz d'échappement (EGT) est inférieure ou égale à ladite première valeur de référence de température (EGT*) ; et

- ladite valeur réelle de la vitesse de rotation de ladite turbine haute pression (6) est inférieure ou égale à ladite première valeur de référence (RSHPT*) ; et dans lequel ledit paramètre opérationnel est le Rapport de Vitesse de Pale (BSR) de ladite turbine de puissance (7), calculé selon la formule :

$$BSR = u/c$$

où :
- u est la vitesse radiale de la roue à palette de ladite turbine de puissance (7), calculée selon la formule :

$$u = (2*\pi*n_{LPT})* (D_{LPT}/2)$$

$n_{LPT}$ et $D_{LPT}$ étant respectivement la vitesse (trs/mn) et le diamètre extérieur de la roue à palette ;
- c est caractéristique des conditions des gaz d'échappement, calculé selon la formule :

$$c = (2*Cp*T*(1-(P_3/P_4)^{((1-\gamma)/\gamma)}))^{1/2}$$

$P_3$ et $P_4$ étant respectivement la pression des gaz d'échappement en amont et en aval de ladite turbine de puissance (7) et dans lequel T est la température des gaz d'échappement avant ladite turbine de puissance (7).

19. Appareil selon la revendication 18, dans lequel ledit appareil comprend un second compresseur (5) disposé en aval dudit premier compresseur (11) le long de ladite conduite d'air d'admission (2) et dans lequel ledit second compresseur (5) est activé si la valeur réelle dudit Rapport de Vitesse de Pale (BSR) est supérieure à ladite valeur de référence (BSR*).

20. Appareil selon l'une quelconque des revendications 13-19, dans lequel ledit appareil comprend des moyens de détection de pression (109) pour détecter la valeur réelle de la pression (BP) en amont de ladite turbine de puissance (7) et dans lequel ladite machine asynchrone (30) augmente la vitesse de rotation de ladite turbine de puissance (7) si ladite pression (BP) est supérieure à une valeur de référence de pression (BP*) et dans lequel ladite machine asynchrone (30) diminue la vitesse de rotation de ladite turbine de puissance (7) si ladite pression (BP) est inférieure à ladite valeur de référence de pression (BP*).

21. Appareil selon la revendication 20, dans lequel ledit appareil comprend un second compresseur (5) disposé en aval dudit premier compresseur (11) le long de ladite conduite d'admission d'air (2) et dans lequel ledit second compresseur (5) est activé si, suite à la diminution de ladite vitesse de rotation de ladite turbine de puissance (7), la valeur réelle de ladite pression (BP) est inférieure à ladite valeur de référence (BP*).

22. Appareil selon la revendication 14, dans lequel ledit appareil comprend en outre un Système Après-Traitement (ATS) et de seconds moyens de température (108) pour détecter la température dudit ATS, dans lequel, lorsque ledit appareil à moteur fonctionnant selon un mode de glissement, alors la machine asynchrone (30) augmente la vitesse de rotation de ladite turbine de puissance (7) si ladite température des gaz d'échappement (EGT) est inférieure à ladite première valeur de référence de température (EGT*) et si ladite température dudit ATS est inférieure à ladite seconde valeur de référence de température (ATST*).

23. Appareil selon la revendication 22, dans lequel ledit appareil comprend un second compresseur (5) disposé en aval dudit premier compresseur (11) le long de ladite conduite d'admission d'air (2) et dans lequel, pendant ledit mode de glissement, ledit second compresseur (5) est activé si, suite à l'augmentation de ladite vitesse de rotation de ladite turbine de puissance (7), la valeur réelle de ladite température de gaz d'échappement (EGT) est supérieure à ladite première valeur de référence de température (EGT*).

**24.** Véhicule, en particulier un véhicule industriel, comprenant un appareil selon l'une des revendications 13 à 23.

**25.** Programme informatique comprenant des moyens de codage d'un programme informatique apte à réaliser toutes les étapes selon l'une quelconque des revendications 1 à 12, dans lequel ledit programme est exécuté sur un ordinateur.

**26.** Support lisible sur ordinateur sur lequel est enregistré un programme, ledit support lisible sur ordinateur comprenant des moyens de codage de programme informatique apte à réaliser toutes les étapes selon l'une quelconque des revendications 1 à 12, lorsque ledit programme est exécuté sur un ordinateur.

Fig. 1

EP 2 898 199 B1

Fig. 2

EP 2 898 199 B1

Fig. 3

Fig. 4

Fig. 5

Fig. 6

ENGINE BRAKE MODE — 500

RSHPT, RSLPT, BP — 501

505

502 — RSHPT>RSHPT*

RSHPT≤RSHPT* — 505

506

507

503 — LPT speed increasing AND RSLPT<RSLPT*

BP<BP*

BP≥BP*

509

504 — RSHPT≤RSHPT*

LPT speed decreasing AND RSLPT<RSLPT*

LPT speed increasing AND RSLPT<RSLPT*

508

BP=BP*

BP<BP* — 510

512

Activation Blower if engine apparatus with inverse layout

511

EP 2 898 199 B1

Fig. 7

```
                    ┌─────────────────────────┐
                    │     COASTING MODE       │──── 600
                    └─────────────────────────┘
                                 │
                    ┌─────────────────────────┐
                    │  RSHPT, RSLPT, EGT, ATST │──── 601
                    └─────────────────────────┘
              ┌──────────────┴──────────────────┐
    ┌──────────────────────┐          ┌──────────────────────┐
    │    RSHPT>RSHPT*       │          │    RSHPT≤RSHPT*       │──── 605
    └──────────────────────┘          └──────────────────────┘
602         │                                   │
    ┌──────────────────────┐          ┌──────────────────────┐
    │  LPT speed increasing │          │      EGT<EGT*         │──── 607
    │         AND           │          │         AND           │
    │    RSLPT<RSLPT*       │          │     ATST<ATST*        │
603 └──────────────────────┘          └──────────────────────┘
            │                                   │
    ┌──────────────────────┐          ┌──────────────────────┐
    │    RSHPT≤RSHPT*       │          │  LPT speed increasing │──── 608
    └──────────────────────┘          │         AND           │
604                                   │    RSLPT<RSLPT*        │
                                      └──────────────────────┘
                              ┌────────────┴──────────────┐
                    ┌──────────────────┐        ┌──────────────────┐
                    │   ATST=ATST*     │        │    EGT>EGT*       │──── 610
                    │      AND         │        └──────────────────┘
                    │    EGT≤EGT*      │                 │
                    └──────────────────┘        ┌──────────────────┐
                                                │ Activation Blower │
609                                             │if engine apparatus│──── 611
                                                │  with inverse     │
                                                │    layout         │
                                                └──────────────────┘
                                                         │
                                                ┌──────────────────┐
                                                │     EGT≤EGT*      │
                                                └──────────────────┘
                                            612
```

EP 2 898 199 B1

**EP 2 898 199 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0222546 A1

- EP 2012060120 W